# EUROPEAN PATENT SPECIFICATION

(11) **EP 4 216 061 B1**
(45) Date of publication and mention of the grant of the patent: **02.12.2026**
(21) Application number: 21896690.1
(22) Date of filing: 26.10.2021
(51) Int. Cl.: G06F 16/27, G06F 9/46, G06F 9/48, G06F 9/50, G06F 16/23

(54) **TRANSACTION PROCESSING METHOD, SYSTEM, APPARATUS, DEVICE, STORAGE MEDIUM, AND PROGRAM PRODUCT**
TRANSAKTIONSVERARBEITUNGSVERFAHREN, SYSTEM, GERÄT, VORRICHTUNG, SPEICHERMEDIUM UND PROGRAMMPRODUKT
PROCÉDÉ DE TRAITEMENT DE TRANSACTION, SYSTÈME, APPAREIL, DISPOSITIF, SUPPORT D'ENREGISTREMENT ET PRODUIT-PROGRAMME

(30) Priority: 27.11.2020 CN 202011362629
(43) Date of publication of application: 26.07.2023
(73) Proprietor: Tencent Technology (Shenzhen) Company Limited, Shenzhen, Guangdong 518057 (CN)
(72) Inventor: LI, Haixiang, Shenzhen, Guangdong 518057 (CN)
(74) Representative: Nederlandsch Octrooibureau
(86) International application number: PCT/CN2021/126408
(87) International publication number: WO 2022/111188

(56) References cited:
- CN-A- 108 958 942
- CN-A- 110 287 022
- CN-A- 111 597 015
- CN-A- 111 597 015
- CN-A- 112 162 846
- US-A1- 2009 070 457
- US-A1- 2011 153 566

## Description

### FIELD OF THE TECHNOLOGY

Embodiments of this application relate to the field of database technologies, and in particular, to a transaction processing method, system and apparatus, a device, a storage medium, and a program product.

### BACKGROUND OF THE DISCLOSURE

With the development of a database technology, distributed database systems have gradually become popular, so as to adapt to service scenarios such as big data and cloud computing. Among a variety of distributed database systems, a distributed database system based on a share-disk architecture is a dominant system.

At present, in the distributed database system based on the share-disk architecture, transactions are allocated according to distribution of data items, and the transactions involving a data item are allocated to fixed node devices serving the data item for independent processing. Based on this, efficiency of transaction processing is limited to a large extent, and reliability of transaction processing is poor.

D1 discloses a transaction processing method and apparatus, a computer device and a storage medium, which belong to the technical field of databases. In the present application, by responding to an execution request of a target transaction, a logic execution life cycle of the target transaction is acquired, After the execution lifecycle check of the logic passes, the target transaction is executed, in a transaction-execution or-validation phase, adjusting a logic execution life cycle according to a target data item in a read set of a target transaction and a data item to be written in a write set, A mechanism for processing a transaction based on a logic execution lifecycle is provided, There is no need to rely on a lock mechanism, and therefore, the present invention is more applicable to an Internet application scenario with few reads and writes, and is beneficial to improving transaction throughput of a distributed database system, This facilitates capacity expansion of a system, and improves transaction processing performance of the system.

D2 discloses a method, system and computer-usable medium for selectively monitoring transactions in a cluster computing environment. A transaction is received by a load balancer. A transaction monitoring manager determines if the received transaction is a candidate for monitoring. If it is, then the resource thresholds defined in the transaction's corresponding TMP are determined. The load balancer is then interrogated to determine which application server instance is assigned to process the transaction. Once determined, resource usage information is collected from the target application server instance and provided to the transaction monitoring manager. The collected resource information is compared to the transaction's corresponding TMP. If resource usage exceeds resource threshold values contained in the TPM, then the transaction is monitored. Otherwise it is not.

### SUMMARY

Embodiments of this application provide a transaction processing method, system and apparatus, a device, a storage medium, and a program product, which can be used for improving efficiency of transaction processing.

The invention is defined in the independent claims. Advantageous modifications are set forth in the dependent claims.

### BRIEF DESCRIPTION OF THE DRAWINGS

FIG. 1 is a schematic diagram of an implementation environment of a transaction processing method according to an embodiment of this application.
FIG. 2 is a flowchart of a transaction processing method according to an embodiment of this application.
FIG. 3 is a schematic diagram of a format of a transaction log according to an embodiment of this application.
FIG. 4 is a schematic diagram of a format of a transaction log according to an embodiment of this application.
FIG. 5 is a schematic diagram of a transaction processing apparatus according to an embodiment of this application.
FIG. 6 is a schematic diagram of a transaction processing apparatus according to an embodiment of this application.
FIG. 7 is a schematic diagram of a transaction processing apparatus according to an embodiment of this application.
FIG. 8 is a schematic structural diagram of a computer device according to an embodiment of this application.

### DESCRIPTION OF EMBODIMENTS

To make objectives, technical solutions, and advantages of this application clearer, implementations of this application are further described below in detail with reference to the accompanying drawings.

The specification and claims of this application, and terms "first" and "second" are used to distinguish similar objects, but are unnecessarily used to describe a specific sequence or order. The data termed in such a way are interchangeable in proper circumstances, so that the embodiments of this application described herein can be implemented in orders other than the order illustrated or described herein. The implementations described in the following exemplary embodiments do not represent all implementations that are consistent with this application. On the contrary, the implementations are merely examples of devices and methods that are described in detail in the appended claims and that are consistent with some aspects of this application.

In some embodiments, a distributed database system referred to in the embodiments of this application is a distributed database system based on a share-disk architecture. The distributed database system based on the share-disk architecture includes at least two node devices. The at least two node devices have their own local memory regions and directly access a same storage system through a network communication mechanism. That is, the at least two node devices share the same storage system. For example, a same Hadoop Distributed File System (HDFS) is shared. A plurality of data tables may be stored in the storage system shared by the at least two node devices. Each data table may be used for storing one or more data items.

From the perspective of logic, node devices in the distributed database system may be divided into two roles: a coordinator node device and a data node device. The coordinator node device is mainly responsible for manufacturing and distributing processing plans and coordinating distributed transactions. The data node device is mainly responsible for receiving the processing plans transmitted by the coordinator node device, executing the corresponding transactions, and returning relevant data involved in the transactions to the coordinator node device.

Minimum operation execution units in the distributed database system are transactions. Depending on whether the transactions need to operate data items on a plurality of data node devices, the transactions may be divided into two types: a distributed transaction and a local transaction. For the two different transactions, different execution processes may be respectively adopted to minimize network communication overhead and improve efficiency of transaction processing. The distributed transaction indicates that a transaction needs to perform read and write operations across a plurality of data node devices. That is, the transaction needs to operate data items on the plurality of data node devices. For example, if a transaction T needs to operate data items on data node devices RM1, RM2, and RM3, the transaction T is a distributed transaction. The local transaction indicates that a transaction only needs to operate data items on a single data node device. For example, if a transaction T only needs to operate data items on RM1, the transaction T is a local transaction.

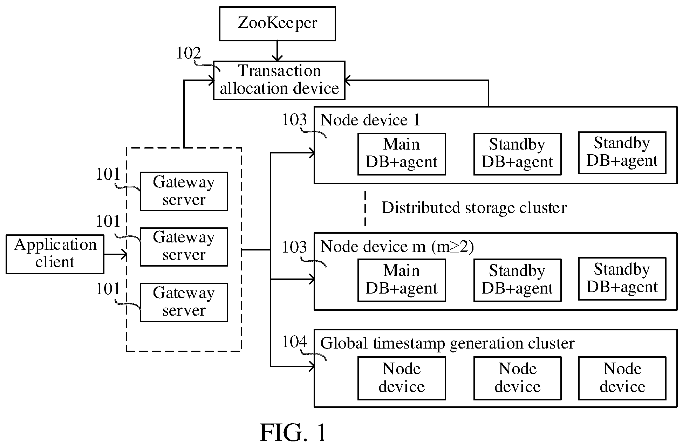

FIG. 1 is a schematic diagram of an implementation environment of a transaction processing method according to an embodiment of this application. Referring to FIG. 1, this embodiment of this application is applicable to a distributed database system based on a share-disk architecture. The distributed database system may include a gateway server 101, a transaction allocation device 102, a distributed storage cluster 103, and a global timestamp generation cluster 104. The distributed storage cluster 103 includes m (m is an integer no less than 2) node devices. The m node devices share a same storage system.

The gateway server 101 is configured to receive an external read/write request, and distribute a read/write transaction corresponding to the read/write request to the transaction allocation device 102 or the distributed storage cluster 103. For example, after a user logs in to an application client on a terminal, the application client is triggered to generate a read/write request, and an application programming interface (API) provided by the distributed database system is invoked to transmit a read/write transaction corresponding to the read/write request to the gateway server 101.

In some embodiments, the gateway server 101 may be combined with any node device in the distributed storage cluster 103 on a same physical machine. In other words, a node device serves as the gateway server 101.

In some embodiments, the terminal in which the application client resides can directly establish communication connections with the transaction allocation device 102 and the distributed storage cluster 103 in the distributed database system. In this case, the gateway server 101 may not exist in the distributed database system.

The transaction allocation device 102 is configured to allocate an appropriate node device as a coordinator node device to a new transaction. In an exemplary embodiment, the transaction allocation device resides in a distributed coordination system (e.g., ZooKeeper). The distributed coordination system may be configured to manage at least one of the gateway server 101, the distributed storage cluster 103, and the global timestamp generation cluster 104. Optionally, a technician may access the distributed coordination system through a scheduler on the terminal, so as to control the back-end distributed coordination system based on the front-end scheduler and realize management of clusters or servers. For example, the technician may control the ZooKeeper to delete a node device from the distributed storage cluster 103 through the scheduler, that is, to invalidate a node device.

The distributed storage cluster 103 may include data node devices and coordinator node devices. Each coordinator node device may correspond to at least one data node device. The division of the data node devices and the coordinator node devices is based on different transactions. Taking a distributed transaction as an example, an initiating node device of the distributed transaction may be referred to as a coordinator node device, and other node devices involved in the distributed transaction are referred to as data node devices. One or more data node devices or coordinator node devices may be provided. A quantity of the data node device or coordinator node device in the distributed storage cluster 103 is not specifically limited in the embodiments of this application.

A global transaction manager is lacking in the distributed database system according to the embodiments of this application. Therefore, an extended architecture (XA, a distributed transaction specification of an X/Open organization) technology or a two-phase commit (2PC) technology may be used for supporting cross-node transactions (distributed transactions) in the system, to ensure atomicity and consistency of data during cross-node write operations. In this case, the coordinator node device is configured to serve as a coordinator in a 2PC algorithm, and data node devices corresponding to the coordinator node device are configured to serve as participants in the 2PC algorithm.

Each data node device or coordinator node device may be a standalone device or use a host-standby structure (namely, a one-host-multiple-standby cluster). As shown in FIG. 1, for example, node devices (data node devices or coordinator node devices) are one-host-two-standby clusters, and each node device includes one host and two standbys. Optionally, each host or standby is correspondingly provided with an agent device. The agent device may be physically independent from the host or the standby. Certainly, the agent device may also be used as an agent module on the host or the standby. Taking a node device 1 as an example, the node device 1 includes a main database and an agent device (referred to as main DB+agent for short), and also includes two standby databases and an agent device (referred to as standby DB+agent for short). The main database is the host described above, and the standby databases are the standbys described above.

The global timestamp generation cluster 104 is configured to generate a global timestamp (Gts) of a distributed transaction. The distributed transaction may refer to a transaction involving a plurality of data node devices. For example, a distributed read transaction may involve reading of data stored on the plurality of data node devices. In another example, a distributed write transaction may involve writing of data on the plurality of data node devices. The global timestamp generation cluster 104 may be logically considered as a single point, but may provide a service with higher availability through a one master-three-slave architecture in some embodiments. The generation of the global timestamp may be implemented in the form of a cluster, which can prevent a single-point failure, and also avoid a problem of single-point bottleneck.

Optionally, the global timestamp is a globally unique and monotonically increasing timestamp ID in the distributed database system, and can be used for marking an order of global commitment of transactions, so as to reflect a sequence relationship between the transactions (a total order relationship of the transactions) in a truetime. The global timestamp may use at least one of a physical clock, a logical clock, and a hybrid physical clock, and a type of the global timestamp is not specifically limited in the embodiments of this application.

In some embodiments, the global timestamp generation cluster 104 may be physically independent, or may be combined with the distributed coordination system (e.g., the ZooKeeper).

FIG. 1 only shows an architectural diagram of lightweight transaction processing, which is an exemplary description of a distributed database system based on a share-disk architecture. In some embodiments, the distributed database system including the gateway server 101, the transaction allocation device 102, the distributed storage cluster 103, and the global timestamp generation cluster 104 may be considered as a server for providing a data service to a user terminal. The server may be an independent physical server, or may be a server cluster or a distributed system formed by a plurality of physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. Optionally, the foregoing user terminal may be a smartphone, a tablet computer, a notebook computer, a desktop computer, a smart speaker, a smartwatch, or the like, but is not limited thereto. The terminal and the server may be directly or indirectly connected in a wired or wireless communication manner. This is not limited in this application.

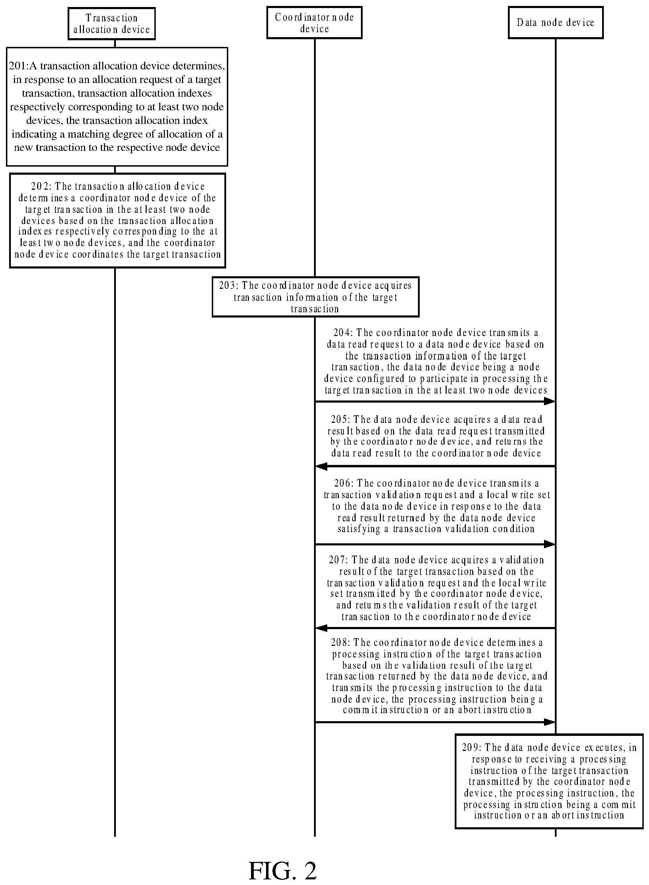

Based on the implementation environment shown in FIG. 1, an embodiment of this application provides a transaction processing method. As shown in FIG. 2, the method according to this embodiment of this application includes the following steps 201 to 209.

In step 201, a transaction allocation device determines, in response to an allocation request of a target transaction, transaction allocation indexes respectively corresponding to at least two node devices, the transaction allocation index indicating a matching degree of allocation of a new transaction to the respective node device.

The transaction allocation device and the at least two node devices reside in a distributed database system, and the at least two node devices share a same storage system. A specific structure of the distributed data system is not limited in the embodiments of this application, provided that the transaction allocation device and the at least two node devices sharing the same storage system are included.

The target transaction refers to a to-be-processed transaction. The target transaction may be a distributed transaction or a local transaction, which is not limited in the embodiments of this application. The allocation request of the target transaction is used for indicating that an appropriate node device is allocated to the target transaction as a coordinator node device, so that the target transaction is coordinated by the allocated coordinator node device.

The allocation request of the target transaction is initiated by a terminal, and the allocation request of the target transaction initiated by the terminal is directly transmitted to the transaction allocation device by the terminal or forwarded to the transaction allocation device by a gateway server, which is not limited in the embodiments of this application. The terminal may be any electronic device corresponding to a user, including, but not limited to, at least one of a smart phone, a tablet computer, a laptop computer, a desktop computer, a smart speaker, and a smart watch. A type of the terminal is not specifically limited in the embodiments of this application. Optionally, an application client is installed on the terminal. The application client may be any client that can provide data services. For example, the application client may be at least one of a payment application client, a take-out application client, a car-hailing application client, and a social application client. A type of the application client is not specifically limited in the embodiments of this application.

The at least two node devices are node devices in the distributed database system and capable of coordinating transactions as decentralized node devices. Each node device can be configured to coordinate distributed transactions through a decentralization algorithm.

After receiving the allocation request of the target transaction, the transaction allocation device needs to allocate an appropriate node device as a coordinator node device to the target transaction to ensure efficiency of transaction processing. In a process of allocating the appropriate node device as the coordinator node device to the target transaction, the transaction allocation device first determines the transaction allocation indexes respectively corresponding to the at least two node devices. The transaction allocation index corresponds to one of the node devices is used for indicating a matching degree of allocation of a new transaction to the node device. The higher the matching degree of allocation of the new transaction to one node device, the more appropriate it is to allocate the new transaction to the node device.

The transaction allocation index is an index determined from the perspective of transactions to measure whether it is appropriate to allocate a new transaction to a node device. In one possible implementation, a process of determining transaction allocation indexes respectively corresponding to at least two node devices includes the following steps 2011 and 2012.

Step 2011: Determine a transaction allocation mode, the transaction allocation mode including one of allocation based on transaction busyness, allocation based on device busyness, and allocation based on hybrid busyness.

The transaction allocation mode is used for indicating a determination manner of determining the transaction allocation indexes corresponding to the node devices. In some embodiments, the transaction allocation mode is set by a developer and uploaded to the transaction allocation device. The transaction allocation mode may vary in different periods of time. The transaction allocation mode adopted when the allocation request of the target transaction is received is determined in step 2011.

The transaction allocation mode includes one of allocation based on transaction busyness, allocation based on device busyness, and allocation based on hybrid busyness. The mode of allocation based on transaction busyness is to determine the transaction allocation indexes in consideration of a transaction processing quantity of the node device. The transaction processing quantity of the node device can reflect transaction busyness of the node device. The mode of allocation based on device busyness is to determine the transaction allocation indexes in consideration of a device resource utilization rate of the node device. The device resource utilization rate of the node device can reflect device busyness of the node device. The mode of allocation based on hybrid busyness is to determine the transaction allocation indexes in comprehensive consideration of the transaction processing quantity of the node device and the device resource utilization rate of the node device. The transaction processing quantity of the node device and the device resource utilization rate of the node device can reflect hybrid busyness of the node device.

Step 2012: Determine the transaction allocation indexes respectively corresponding to the at least two node devices according to a determination manner indicated by the transaction allocation mode.

Different transaction allocation modes indicate different determination manners. After the transaction allocation mode is determined, the transaction allocation indexes respectively corresponding to the at least two node devices are determined according to the determination manner indicated by the transaction allocation mode. In the following, manners of determining a transaction allocation index corresponding to a first node device in the at least two node devices in different transaction allocation modes are respectively introduced. The first node device is any node device in the at least two node devices.

In some embodiments, the transaction allocation mode is the allocation based on transaction busyness. In this case, the manner of determining the transaction allocation index corresponding to the first node device according to the determination manner indicated by the transaction allocation mode involves: determining the transaction allocation index corresponding to the first node device based on a transaction processing quantity of the first node device.

The transaction processing quantity of the first node device refers to a quantity of transactions needing to be processed by the first node device per unit time. The transactions needing to be processed herein refer to transactions that have been allocated to the first node device for processing. The more transactions the first node device needs to process per unit time, the more inappropriate it is to allocate a new transaction to the first node device. In an exemplary embodiment, the transaction processing quantity of the first node device may be fed by the first node device back to the transaction allocation device, or may be determined by the transaction allocation device according to allocation of transactions, which is not limited in the embodiments of this application.

How the transaction allocation indexes are expressed is not limited in the embodiments of this application. For example, the transaction allocation indexes are expressed as busyness levels or numerical values.

For example, when the transaction allocation indexes are expressed as the busyness levels, the manner of determining the transaction allocation index corresponding to the first node device based on the transaction processing quantity of the first node device involves: setting different transaction processing quantity ranges for different busyness levels, and taking a busyness level corresponding to a transaction processing range in which the transaction processing quantity of the first node device is located as a busyness level corresponding to the first node device. For example, the busyness levels include "busy", "partially busy", and "idle". The transaction processing quantity range corresponding to "busy" is [10, +∞), the transaction processing quantity range corresponding to "partially busy" is [3, 10), and the transaction processing quantity range corresponding to "idle" is [0, 3). If the transaction processing quantity of the first node device is 2, "idle" is taken as the transaction allocation index corresponding to the first node device. The closer the transaction allocation index corresponding to the first node device is to "idle", the higher the matching degree of allocation of the new transaction to the first node device.

For example, when the transaction allocation indexes are expressed as the numerical values, the manner of determining the transaction allocation index corresponding to the first node device based on the transaction processing quantity of the first node device involves: numerically processing the transaction processing quantity of the first node device, and taking a numerical value obtained after the numerical processing as the transaction allocation index corresponding to the first node device. A manner of numerically processing the transaction processing quantity may be set according to experience or flexibly adjusted according to an application scenario, which is not limited in the embodiments of this application. For example, the manner of numerically processing the transaction processing quantity involves: calculating a product of the transaction processing quantity and a reference weight. In this way, the greater the transaction processing quantity, the greater the numerical value obtained after the numerical processing. The smaller the transaction allocation index corresponding to the first node device, the higher the matching degree of allocation of the new transaction to the first node device, wherein the matching degree of allocation of the new transaction is used to represent the probability of allocating the new transaction to a node device.

In some embodiments, the transaction allocation mode is the allocation based on device busyness. In this case, the manner of determining the transaction allocation index corresponding to the first node device according to the determination manner indicated by the transaction allocation mode involves: determining the transaction allocation index corresponding to the first node device based on a device resource utilization rate of the first node device.

The device resource utilization rate of the first node device refers to a ratio of device resources used by the first node device to total device resources. For example, the device resources refer to central processing unit (CPU) resources. The higher the device resource utilization rate of the first node device, the more inappropriate it is to allocate new transactions to the first node device. The device resource utilization rate of the first node device may be monitored in real time and fed back to the transaction allocation device by the first node device, or monitored and obtained by the transaction allocation device, which is not limited in the embodiments of this application.

A manner of determining the transaction allocation index corresponding to the first node device based on the device resource utilization rate of the first node device may be obtained with reference to the manner of determining the transaction allocation index corresponding to the first node device based on the transaction processing quantity of the first node device. Details are not described herein again.

In some embodiments, the transaction allocation mode is the allocation based on hybrid busyness. In this case, the manner of determining the transaction allocation index corresponding to the first node device according to the determination manner indicated by the transaction allocation mode involves: determining the transaction allocation index corresponding to the first node device based on a transaction processing quantity of the first node device, a device resource utilization rate of the first node device, a transaction processing quantity weight, a device resource utilization rate weight, and a weight adjustment parameter.

In an exemplary embodiment, the transaction processing quantity weight and the device resource utilization rate weight are used for adjusting percentages of such two parameters as the transaction processing quantity and the device resource utilization rate, which may be obtained by actual measurement. For example, default values of the transaction processing quantity weight and the device resource utilization rate weight are both 1. The weight adjustment parameter refers to a relative proportion factor of the device resource utilization rate and the transaction processing quantity, which is used for adjusting weight allocation of the device resource utilization rate and the transaction processing quantity and may be obtained by actual measurement. For example, a default value of the weight adjustment parameter is 0.33.

For example, the device resource utilization rate weight is denoted by p1, the transaction processing quantity weight is denoted by p2, and the weight adjustment parameter is denoted by w. Then, the transaction allocation index Q corresponding to the first node device may be expressed as: Q=p1×device resource utilization rate+p2×w×transaction processing quantity.

In some embodiments, in the mode of allocation based on hybrid busyness, in addition to comprehensive consideration of the transaction processing quantity and the device resource utilization rate, another factor may also be taken into account, such as a quantity of long transactions in the transactions needing to be processed. In this case, the transaction allocation index Q corresponding to the first node device may be expressed as: Q=p1×device resource utilization rate+p2×w×transaction processing quantity+p3×another factor. p3 denotes another factor weight, and p3 may be obtained by actual measurement according to a type of the another factor. For example, a default value of p3 is 1. The smaller the transaction allocation index Q corresponding to the first node device, the higher the matching degree of allocation of the new transaction to the first node device.

The above describes a process of determining the transaction allocation index corresponding to the first node device only from the perspective of the first node device. The transaction allocation indexes respectively corresponding to the at least two node devices in the distributed database system can be determined in the above manner, and then step 202 is performed.

In step 202, the transaction allocation device determines a coordinator node device of the target transaction in the at least two node devices based on the transaction allocation indexes respectively corresponding to the at least two node devices, and the coordinator node device coordinates the target transaction.

The coordinator node device of the target transaction refers to a node device suitable for allocating a new transaction in the at least two node devices. The coordinator node device of the target transaction is configured to coordinate the target transaction. That is, the coordinator node device of the target transaction refers to a coordinator of the target transaction. For example, a process of coordinating the target transaction refers to a process of initiating the target transaction in the distributed database system and then organizing a data node device of the target transaction to jointly process the target transaction. The data node device of the target transaction refers to a node device configured to participate in processing the target transaction in the at least two node devices. That is, the data node device of the target transaction refers to a participant in the target transaction.

The coordinator node device and the data node device referred to in the embodiments of this application are based on the target transaction. For different transactions, the coordinator node device or the data node device is not fixed. In other words, a same node device may belong to the coordinator node device for some transactions, but belong to the data node device for some other transactions.

A manner of determining the coordinator node device of the target transaction in the at least two node devices based on the transaction allocation indexes respectively corresponding to the at least two node devices varies according to different expression forms of the transaction allocation indexes, which is not limited in the embodiments of this application, provided that the coordinator node device can be ensured as a node device currently suitable for allocating a new transaction.

In some embodiments, the transaction allocation indexes are expressed as busyness levels. The busyness levels are "busy", "partially busy", and "idle" respectively. In this case, the manner of determining the coordinator node device of the target transaction in the at least two node devices based on the transaction allocation indexes respectively corresponding to the at least two node devices involves: taking node devices in the at least two node devices and corresponding to the transaction allocation index "idle" as alternative node devices, and taking any node device in the alternative node devices as the coordinator node device of the target transaction.

For example, if no node device corresponds to the transaction allocation index "idle", node devices in the at least two node devices and corresponding to the transaction allocation index "partially busy" are taken as alternative node devices, and then any node device in the alternative node devices is taken as the coordinator node device of the target transaction. For example, if the transaction allocation indexes corresponding to the at least two node devices are "busy", the determination of the coordinator node device of the target transaction is suspended, the transaction allocation indexes respectively corresponding to the at least two node devices are re-determined after a wait for a reference duration, and then the coordinator node device of the target transaction is re-determined. The reference duration is set according to experience. For example, the reference duration is an actually measured average duration to complete a transaction.

In some embodiments, the transaction allocation indexes are expressed as numerical values, and the smaller the transaction allocation index corresponding to one node device, the higher the matching degree of allocation of a new transaction to the node device. In this case, the manner of determining the coordinator node device of the target transaction in the at least two node devices based on the transaction allocation indexes respectively corresponding to the at least two node devices involves: taking node devices in the at least two node devices and corresponding to first s (s is an integer no less than 1) minor transaction allocation indexes as alternative node devices, and taking any node device in the alternative node devices as the coordinator node device of the target transaction. The value of s is set according to experience or flexibly adjusted according to a total quantity of the at least two node devices, which is not limited in the embodiments of this application. For example, the value of s is 1, the value of s is 3, or the like.

The above is only an exemplary description of the manner of determining the coordinator node device of the target transaction in the at least two node devices based on the transaction allocation indexes respectively corresponding to the at least two node devices, and this embodiment of this application is not limited thereto. For example, in a case where the transaction allocation indexes are expressed as numerical values, and the greater the transaction allocation index corresponding to one node device, the higher a matching degree of allocation of a new transaction to the node device, node devices in the at least two node devices and corresponding to first t (t is an integer no less than 1) major transaction allocation indexes are taken as alternative node devices, and any node device in the alternative node devices is taken as the coordinator node device of the target transaction.

The coordinator node device of the target transaction determined based on the transaction allocation indexes is a node device suitable for allocating a new transaction in the at least two node devices, and then the target transaction is allocated to the coordinator node device. The target transaction is coordinated by the coordinator node device, which is beneficial to ensure processing efficiency of the target transaction.

In the related art, each node device serves a certain quantity of regions. Each node device maintains distribution information of data items in the regions served by the node device. The distribution information of the data items is used for indicating storage positions of the data items. In addition, meta-information of the regions is maintained in the transaction allocation device. In the architecture, in the related art, the transaction allocation device determines, according to the meta-information of the regions maintained, a node device configured to serve regions in which data items involved in the target transaction are located, and then the node device independently processes the target transaction. In this way, efficiency of transaction processing is limited to a large extent, real distributed transactions cannot be supported, and global consistent multi-read and consistent multi-write capabilities with transaction attribute features are not good.

In the embodiments of this application, the node devices no longer serve fixed regions, the node devices no longer maintain the distribution information of the data items, and the transaction allocation device no longer maintains the meta-information of the regions. For example, the meta-information of the regions is distributed in the entire shared storage system in the distributed database system. Based on such improvement, the transaction allocation device can allocate an appropriate node device as the coordinator node device to the target transaction based on the transaction allocation indexes, without considering data items involved in the transaction and distribution of the data items. The node devices can automatically import data from the shared storage system based on a requirement of a structured query language (SQL) statement in the transaction. In this way, each node device can coordinate the distributed transaction as a decentralized node device, enabling the distributed database system to have a decentralized distributed transaction processing capability.

In one possible implementation, after the determining a coordinator node device of the target transaction, the method further includes: transmitting device ID information of the coordinator node device to a terminal initiating the allocation request, the terminal being configured to transmit transaction information of the target transaction to the coordinator node device according to the device ID information of the coordinator node device, and coordinating, by the coordinator node device, the target transaction based on the transaction information.

The device ID information of the coordinator node device is used for uniquely identifying the coordinator node device. The device ID information of the coordinator node device is transmitted to the terminal initiating the allocation request, so that the terminal can know the coordinator node device configured to coordinate the target transaction. The terminal transmits the transaction information of the target transaction to the coordinator node device after knowing, according to the device ID information, the coordinator node device configured to coordinate the target transaction. The transaction information of the target transaction is used for indicating relevant processing operations of the target transaction. For example, the transaction information of the target transaction refers to an SQL statement.

In one possible implementation, the terminal directly transmits the transaction information of the target transaction to the coordinator node device. Alternatively, the terminal transmits the transaction information of the target transaction and the device ID information of the coordinator node device to a gateway server, and the transaction information of the target transaction is forwarded by the gateway server to the coordinator node device.

The coordinator node device coordinates the target transaction based on the transaction information after receiving the transaction information of the target transaction. The coordinator node device can parse the transaction information, such as the SQL statement, generate a transaction execution plan, and then complete processing of the target transaction through communication with a relevant data node device.

In an exemplary embodiment, the coordinator node device of the target transaction is determined according to the transaction allocation indexes, and different transactions can be coordinated by using different node devices. Therefore, the method according to this embodiment of this application can realize a decentralized transaction processing process. In the decentralized transaction processing process, a plurality of distributed transactions are respectively coordinated by a plurality of node devices. During the coordination of the target transaction by the coordinator node device of the target transaction, if a plurality of distributed transactions exist, the coordinator node device establishes communication with other node devices, acquire data information generated during coordination of other distributed transactions by the other node devices, and then verify data exception or serializability according to the acquired data information to judge whether the target transaction conforms to transactional consistency and ensure that a transaction processing technology is correct. In an exemplary embodiment, the coordinator node device buffers the data information from the other node devices in a temporary data buffer, and the target transaction ends and is cleaned up.

In one possible implementation, for the terminal initiating the allocation request of the target transaction, if other transactions occur after the terminal is connected to the distributed database system, each of the other transactions is coordinated by the coordinator node device. Alternatively, each of the other transactions is coordinated by an appropriate coordinator node device allocated in real time by the transaction allocation device according to the transaction allocation indexes of the node devices, which is not limited in the embodiments of this application.

In step 203, the coordinator node device acquires transaction information of the target transaction.

The transaction information of the target transaction may be directly transmitted to the coordinator node device by a terminal creating the target transaction, or forwarded to the coordinator node device by the gateway server, which is not limited in the embodiments of this application. For example, the transaction information of the target transaction refers to an SQL statement for implementing the target transaction.

In one possible implementation, the coordinator node device initializes the target transaction after acquiring the transaction information of the target transaction. A phase of initializing the target transaction may be considered as a phase of establishing a transaction snapshot. In this phase, global consistency snapshot points are established to ensure global read consistency.

In one possible implementation, in a process of initializing the target transaction, the coordinator node device may perform at least one of the following two initialization operations.

Initialization operation 1: The coordinator node device allocates a globally unique transaction identifier (TID) to the target transaction.

The TID is used for uniquely identifying the target transaction.

Initialization operation 2: The coordinator node device records initial status information of the target transaction in a first transaction status list.

In this embodiment of this application, a transaction status list maintained by the coordinator node device is referred to as the first transaction status list. The first transaction status list is a global status list used for recording global statuses of target transactions in a decentralized framework.

In an exemplary embodiment, the status information of the target transaction recorded in the first transaction status list includes, but is not limited to, a TID of the target transaction, a global transaction status of the target transaction, and a logical lifecycle of the target transaction. The logical lifecycle is formed by a timestamp lower bound and a timestamp upper bound. The timestamp lower bound of the logical lifecycle is referred to as a begintimestamp (Bts) of the target transaction, and the timestamp upper bound of the logical lifecycle is referred to as an endtimestamp (Ets) of the target transaction. In other words, the logical lifecycle is formed by the timestamp lower bound Bts and the timestamp upper bound Ets.

In the initial status information of the target transaction, the TID of the target transaction is allocated in the initialization operation 1, the global transaction status of the target transaction is Grunning, the logical lifecycle of the target transaction is a first logical lifecycle, a timestamp lower bound Bts of the first logical lifecycle is a globally unique increasing timestamp value, and a timestamp upper bound Ets of the first logical lifecycle is +∞.

In an exemplary embodiment, the timestamp lower bound Bts and the timestamp upper bound Ets of the first logical lifecycle are acquired by: acquiring, by the coordinator node device, timestamp values from a global clock for isolation levels above a serializability level; and acquiring, by the coordinator node device, the timestamp values from a local hybrid logical clock (HLC) for the serializability level and weaker isolation levels. Certainly, in some embodiments, for the serializability level and the weaker isolation levels, the coordinator node device can also acquire the timestamp lower bound Bts and the timestamp upper bound Ets of the first logical lifecycle by acquiring the timestamp values from the global block. In an exemplary embodiment, it is more efficient to acquire the timestamp values from the local HLC for the serializability level and the weaker isolation levels.

The global clock refers to a clock generated by a global logical clock generator, which is monotonically increasing and may be in the form of either walltime or a natural number N. For example, the global clock is provided by a global timestamp generation cluster in the distributed database system. For example, for the distributed database system based on the share-disk architecture, the global clock is provided by the storage system in the distributed database system through an API. For example, the global logical clock generator can assign values to a Bts and an Ets of a transaction, and can also assign a value to a global log sequence number (LSN) of write ahead logging (WAL).

In some embodiments, the global clock is a logical concept, which provides a uniform monotonically increasing value for the whole system. A physical form may be a global physical clock or a global logical clock. The global clock may be implemented in a variety of forms. For example, the global clock is a distributed decentralized clock similar to a Google "Truetime" mechanism. Alternatively, the global clock is a clock uniformly provided by host-standby systems using a plurality of redundant nodes (such as a cluster constructed by a consistency protocol (such as Paxos/Raft)). Alternatively, the global clock is a clock provided by an algorithmic mechanism with a precise synchronization mechanism and a node exit mechanism.

In an exemplary embodiment, a Bts and an Ets of a transaction are each formed by 8 bytes. The 8 bytes are divided into two parts. The first part is a value of a physical timestamp (that is, a Unix (an operating system) timestamp, which is accurate to milliseconds), which is used for identifying global time (represented by gts). The second part is monotonically increasing counts in a certain millisecond, which is used for identifying relative time in the global time (that is, local time, represented by lts). For example, first 44 bits of the 8 bytes are the first part, which represents a total of 244 unsigned integers, so a total of about 557.8 ( $\frac{{2}^{44}}{1000 \times 60 \times 60 \times 24 \times 365} = 557.8$) years of physical timestamps can be theoretically represented. The last 20 bits of the 8 bytes are the second part, so there are 220 (about a million) counts per millisecond. In an exemplary embodiment, the number of bits in the two parts may also be adjusted, so that ranges represented by the global time gts and the local time lts change.

A Bts and an Ets of a transaction may be formed by more than 8 bytes or less than 8 bytes, depending on an actual requirement. For example, the Bts and the Ets are adjusted to be formed by 10 bytes, so that the local time lts is increased to cope with a larger number of concurrent transactions.

For example, for two timestamps Ti.bts and Tj.bts formed by the global time gts and the local time lts, if Ti.bts.gts < Tj.bts.gts, or Ti.bts.gts = Tj.bts.gts and Ti.bts.lts<Tj.bts.lts, it is considered that Ti.bts<Tj.bts.

In step 204, the coordinator node device transmits a data read request to a data node device based on the transaction information of the target transaction, the data node device being a node device configured to participate in processing the target transaction in the at least two node devices.

After initializing the target transaction, the coordinator node device starts an execution phase of the target transaction. The execution phase of the transaction may be considered as an operation phase of transaction semantics implementation.

The data node device is a node device configured to participate in processing the target transaction in the at least two node devices. The data node device can acquire data items involved in the target transaction. That is, the data node device in the embodiments of this application is the data node device related to the target transaction. The transaction information of the target transaction carries relevant information of data needing to be read. The coordinator node device can generate the data read request according to the transaction information of the target transaction, and then transmit the data read request to the data node device.

In one possible implementation, the data read request is expressed as a ReadRequestMessage (rrqm for short).

In one possible implementation, the data read request carries the first logical lifecycle of the target transaction, a TID of the target transaction, and a read plan. The first logical lifecycle is expressed by the timestamp lower bound Bts and the timestamp upper bound Ets. The read plan refers to a data read plan corresponding to the target transaction, which is used for indicating the data items needing to be read. In an exemplary embodiment, the TID, the timestamp lower bound Bts, the timestamp upper bound Ets, and the read plan are respectively recorded in four fields of the rrqm.

one or more data node devices may be provided. A quantity of the data node device is not specifically limited in the embodiments of this application. In a case where a plurality of data node devices are provided, data read requests transmitted to different data node devices carry different read plans to indicate a need to read different data items in the different data node devices.

In step 205, the data node device acquires a data read result based on the data read request transmitted by the coordinator node device, and returns the data read result to the coordinator node device.

After acquiring the data read request, the data node device acquires the data read result based on the data read request. In one possible implementation, in a case where the data read request carries the first logical lifecycle of the target transaction, a process of acquiring, by the data node device, the data read result based on the data read request includes the following steps 2051 to 2053.

Step 2051: Determine, based on the first logical lifecycle, visible version data of a to-be-read data item indicated by the data read request.

The data node device can determine, based on the read plan carried in the data read request, a data item needing to be read by the target transaction, and the data item needing to be read by the target transaction is taken as the to-be-read data item. Visible version data of the to-be-read data item refers to data of a certain version that is visible to the target transaction among data of various versions corresponding to the to-be-read data item. For example, the data node device is provided with a data buffer. If data of various versions corresponding to the to-be-read data item exists in the data buffer, the data node device directly acquires the data of various versions corresponding to the to-be-read data item from the data buffer. If the data of various versions corresponding to the to-be-read data item does not exist in the data buffer, the data node device acquires the data of various versions corresponding to the to-be-read data item from the shared storage system.

In an exemplary embodiment, after receiving the data read request, the data node device first checks whether a local transaction status list (Local TS) includes status information of the target transaction. The local transaction status list is a transaction status list maintained by the data node device. Status information of various uncommitted transactions in which the data node device participates is recorded in the local transaction status list. In an exemplary embodiment, after receiving the data read request, the data node device checks, according to the TID of the target transaction carried in the data read request, whether the local transaction status list includes the status information of the target transaction. The following two check results are included.

Check result 1: The local transaction status list does not include the status information of the target transaction.

In this case, the status information of the target transaction may be initialized in the local transaction status list. That is, a record related to the target transaction is inserted into the Local TS. Values in the record are respectively the TID of the target transaction carried in the data read request rrqm.TID, the timestamp lower bound of the first logical lifecycle of the target transaction carried in the data read request rrqm.Bts, the timestamp upper bound of the first logical lifecycle of the target transaction carried in the data read request rrqm.Ets, and a current transaction status of the target transaction indicated by the data read request rrqm.Running.

In this case, a manner of determining, based on the first logical lifecycle, the visible version data of the to-be-read data item indicated by the data read request involves: determining visible version data of the to-be-read data item relative to the first logical lifecycle.

Check result 2: The local transaction status list includes the status information of the target transaction.

In this case, it indicates that the target transaction has accessed the data node device before the data read request is received. In this case, the status information of the target transaction on the data node device may be updated. An update method includes: updating the timestamp lower bound of the logical lifecycle of the target transaction T.Bts to a queried maximum value in the timestamp lower bound T.Bts and the timestamp lower bound carried in the data read request rrqm.Bts (i.e., the timestamp lower bound of the first logical lifecycle). In other words, T.Bts=max(T.Bts, rrqm.Bts). In addition, the timestamp upper bound of the logical lifecycle of the target transaction T.Ets is further updated to a queried minimum value in the timestamp upper bound T.Ets and the timestamp upper bound carried in the data read request rrqm.Ets (i.e., the timestamp upper bound of the first logical lifecycle). In other words, T.Ets= min(T.Ets, rrqm.Ets). A logical lifecycle formed by the updated timestamp lower bound and the updated timestamp upper bound is taken as an updated logical lifecycle.

In this case, the manner of determining, based on the first logical lifecycle, the visible version data of the to-be-read data item indicated by the data read request involves: determining the updated logical lifecycle based on the first logical lifecycle; and determining visible version data of the to-be-read data item relative to the updated logical lifecycle.

An implementation of determining the visible version data of the to-be-read data item relative to the first logical lifecycle is similar to an implementation of determining the visible version data of the to-be-read data item relative to the updated logical lifecycle. In the embodiments of this application, description is based on an example in which the visible version data of the to-be-read data item relative to the first logical lifecycle is determined.

In one possible implementation, before the visible version data of the to-be-read data item relative to the first logical lifecycle is determined, legitimacy of the first logical lifecycle is first checked to determine whether the first logical lifecycle is effective. For example, a manner of checking the legitimacy of the first logical lifecycle involves: checking whether the timestamp lower bound of the first logical lifecycle is less than the timestamp upper bound of the first logical lifecycle. When the timestamp lower bound of the first logical lifecycle is no less than the timestamp upper bound of the first logical lifecycle, it indicates that the first logical lifecycle is ineffective. In this case, the transaction status of the target transaction in the local transaction status list is updated from Running to Aborted. In addition, the data node device returns a data read result carrying an abort message to the coordinator node device. The data read result is expressed as a ReadReplyMessage (rrpm for short). In a case where the data read result carries the abort message, an IsAbort field in the rrpm is equal to 1, that is, rrpm.IsAbort=1.

When the timestamp lower bound of the first logical lifecycle is less than the timestamp upper bound of the first logical lifecycle, it indicates that the first logical lifecycle is effective. In this case, the operation of determining visible version data of the to-be-read data item relative to the first logical lifecycle is performed.

In one possible implementation, a process of determining the visible version data of the to-be-read data item relative to the first logical lifecycle involves: in response to a creation timestamp of data of the latest version of the to-be-read data item being less than the timestamp upper bound of the first logical lifecycle, taking the data of the latest version as the visible version data; and in response to the creation timestamp of data of the latest version of the to-be-read data item being no less than the timestamp upper bound of the first logical lifecycle, continuing to compare data of a previous version of the to-be-read data item with the timestamp upper bound of the first logical lifecycle until data of a version with a first creation timestamp less than the timestamp upper bound of the first logical lifecycle is determined, and taking the data of the version as the visible version data.

In other words, in a process of determining visible version data of a to-be-read data item x relative to the logical lifecycle, the data node device first checks data of the latest version of the to-be-read data item x. If a timestamp upper bound of the logical lifecycle T.Ets is greater than a creation timestamp of the data of the latest version Wts, the data of the latest version is the visible version data relative to the logical lifecycle. Otherwise, the data of the latest version is not the visible version data relative to the logical lifecycle, there is a need to search for data of a previous version until a first piece of data of a version x.v satisfying T.Ets>Wts is found, and the data of the version x.v is taken as the visible version data relative to the logical lifecycle.

In one possible implementation, after the visible version data is determined, the visible version data x.v is stored in a read set of the target transaction. Optionally, the read set herein may be a local read set or a global read set. In the embodiments of this application, description is based on an example in which the read set is the local read set, which can prevent communication overhead caused by synchronization of the global read set.

In an exemplary embodiment, visible version data of a data item to be read by a transaction is recorded in a read set of the transaction. For a distributed read transaction, a read set of the distributed read transaction may be divided into a local read set and a global read set. The local read set resides on the data node device, while the global read set resides on the coordinator node device. Certainly, the coordinator node device may periodically synchronize the global read set to each data node device, so that the global read set of the transaction can also be maintained on the data node device.

Step 2052: Determine a second logical lifecycle of the target transaction based on a creation timestamp of the visible version data and the first logical lifecycle.

After determining the visible version data, the data node device determines the second logical lifecycle of the target transaction based on the creation timestamp of the visible version data and the first logical lifecycle.

In some embodiments, when the visible version data is visible version data relative to the first logical lifecycle, an implementation of step 2052 involves: determining the second logical lifecycle of the target transaction directly based on the creation timestamp of the visible version data and the first logical lifecycle. When the visible version data is visible version data relative to the updated logical lifecycle determined according to the first logical lifecycle, an implementation of step 2052 involves: determining the second logical lifecycle of the target transaction based on the creation timestamp of the visible version data and the updated logical lifecycle determined according to the first logical lifecycle. In the embodiments of this application, description is based on an example in which the second logical lifecycle of the target transaction is determined directly based on the creation timestamp of the visible version data and the first logical lifecycle.

In one possible implementation, a manner of determining the second logical lifecycle of the target transaction directly based on the creation timestamp of the visible version data and the first logical lifecycle involves: adjusting the timestamp lower bound of the first logical lifecycle, so that the timestamp lower bound of the first logical lifecycle is greater than the creation timestamp of the visible version data x.v, that is, T.Bts>x.v.Wts, to eliminate write and read exceptions; and taking a logical lifecycle obtained after the adjustment as the second logical lifecycle.

In another possible implementation, in a case where the visible version data is data of the latest version of the to-be-read data item, the manner of determining the second logical lifecycle of the target transaction directly based on the creation timestamp of the visible version data and the first logical lifecycle involves: adjusting the timestamp lower bound of the first logical lifecycle, so that the timestamp lower bound of the first logical lifecycle is greater than the creation timestamp of the visible version data x.v, that is, T.Bts>x.v.Wts, to eliminate write and read exceptions; adjusting the timestamp upper bound of the first logical lifecycle in response to a pending write transaction corresponding to the visible version data not being empty, so that the timestamp upper bound of the first logical lifecycle is less than a timestamp lower bound of a logical lifecycle of the pending write transaction corresponding to the visible version data, that is, T.Ets<T0.Bts (T0 denotes the pending write transaction corresponding to the visible version data), to eliminate read-write conflicts; and taking a logical lifecycle obtained after the adjustment as the second logical lifecycle.

The pending write transaction WT corresponding to the visible version data is a transaction that is modifying a data item corresponding to the visible version data and has been validated. For example, the pending write transaction is recorded by recording a TID of the pending write transaction. In some embodiments, in a case where the visible version data is data of the latest version, the TID of the target transaction is added to an active transaction set of the visible version data; and the visible version data is added to a local read set of the target transaction.

The active transaction set (RTlist) is used for recording active transactions that have accessed the data of the latest version, also known as a read transaction list. The active transaction set may be in the form of an array, a list, a queue, a stack, or the like. The form of the active transaction set is not specifically limited in the embodiments of this application. Each element in the RTlist may be a TID of a transaction that has read the data of latest version.

Step 2053: Take a result carrying the second logical lifecycle and the visible version data as the data read result.

After determining the second logical lifecycle and the visible version data, the data node device takes the result carrying the second logical lifecycle and the visible version data as the data read result, and then returns the data read result carrying the second logical lifecycle and the visible version data to the coordinator node device to enable the coordinator node device to acquire the second logical lifecycle and the visible version data. For example, the data read result is expressed as an rrpm. For example, the rrpm carrying the second logical lifecycle and the visible version data includes Bts, Ets, and Value fields. The Bts field and the Ets field respectively record a timestamp lower bound of the second logical lifecycle and a timestamp upper bound of the second logical lifecycle, and the Value field records values of the visible version data.

In step 206, the coordinator node device transmits a transaction validation request and a local write set to the data node device in response to the data read result returned by the data node device satisfying a transaction validation condition.

After the data node device returns the data read result to the coordinator node device, the coordinator node device determines whether the data read result satisfies the transaction validation condition, and then when determining that the data read result satisfies the transaction validation condition, transmits the transaction validation request and the local write set to the data node device to enable the data node device to validate the target transaction.

For example, in a process of determining whether the data read result satisfies the transaction validation condition, the coordinator node device first determines whether the data read result carries an abort message, that is, check whether the IsAbort field in the rrpm is equal to 1. If the data read result carries the abort message, that is, rrpm.IsAbort=1, it is considered that the data read result does not satisfy the transaction validation condition. In this case, a global abort phase is entered.

If data read result does not carry the abort message, the logical lifecycle of the target transaction in the first transaction status list is updated. An update manner involves: taking a maximum value in the timestamp lower bound of the first logical lifecycle and a timestamp lower bound of the second logical lifecycle as a timestamp lower bound of a third logical lifecycle of the target transaction, and taking a minimum value in the timestamp upper bound of the first logical lifecycle and a timestamp upper bound of the second logical lifecycle as a timestamp upper bound of the third logical lifecycle of the target transaction. That is, T.Bts=max(T.Bts, rrpm.Bts), and T.Ets=min(T.Ets, rrpm.Ets). T.Bts and T.Ets in the parentheses are the timestamp lower bound and the timestamp upper bound of the logical lifecycle before the update (i.e., the first logical lifecycle) respectively, and rrpm.Bts and rrpm.Ets are the timestamp lower bound and the timestamp upper bound of the second logical lifecycle carried in the data read result respectively.

After the logical lifecycle of the target transaction in the first transaction status list is updated, it is checked whether T.Bts in the first transaction status list is less than T.Ets, that is, whether the timestamp lower bound of the third logical lifecycle is less than the timestamp upper bound of the third logical lifecycle, to determine whether the third logical lifecycle is effective. When the timestamp lower bound of the third logical lifecycle is no less than the timestamp upper bound of the third logical lifecycle, the third logical lifecycle is ineffective. In this case, it is considered that the data read result does not satisfy the transaction validation condition, and the global abort phase is entered. When the timestamp lower bound of the third logical lifecycle is less than the timestamp upper bound of the third logical lifecycle, the third logical lifecycle is effective. In this case, it is considered that the data read result satisfies the transaction validation condition, and a transaction validation request carrying the third logical lifecycle is transmitted to the data node device.

In an exemplary embodiment, if determining to abort the target transaction, the coordinator node device needs to modify a global transaction status of the target transaction in the first transaction status list to Gaborting to notify a relevant child node (that is, the data node device) of local aborting.

In an exemplary embodiment, before transmitting the transaction validation request, the coordinator node device modifies the global transaction status of the target transaction in the first transaction status list to Gvalidating. For example, the transaction validation request is expressed as a ValidateRequestMessage (vrm for short). For example, the vrm includes Bts and Ets fields. The Bts field and the Ets field respectively record a timestamp lower bound and a timestamp upper bound of the latest logical lifecycle of the target transaction in the first transaction status list, that is, the timestamp lower bound and the timestamp upper bound of the third logical lifecycle.

In some embodiments, a plurality of data node devices are provided. In this case, each data node device returns a data read result. The data read result satisfying a transaction validation condition means that each data read result returned by each data node device satisfies the transaction validation condition. In this case, the third logical lifecycle is a logical lifecycle determined based on comprehensive consideration of various data read results.

In some embodiments, after all required data has been read and updates have been written to local memory, it is considered that the transaction validation condition is satisfied. In other words, the coordinator node device transmits the transaction validation request to the data node device in response to the third logical lifecycle being effective and a global write set of the target transaction being stored in local memory. The global write set of the target transaction is generated and transmitted to the coordinator node device by the terminal, or generated by the coordinator node device, which is not limited in the embodiments of this application.

Data items needing to be updated by a transaction are recorded in a write set of the transaction. Similar to the structure of the read set, the write set of the transaction may also be maintained using a memory linked list structure. For a distributed write transaction, a write set of the distributed write transaction may be divided into a local write set and a global write set. The local write set resides on the data node device, while the global write set resides on the coordinator node device. Certainly, the coordinator node device may periodically synchronize the global write set to each data node device, so that the global write set of the transaction can also be maintained on the data node device.

After the global write set of the target transaction is written to the local memory of the coordinator node device, the coordinator node device can determine a local write set of the data node device based on the global write set to transmit the transaction validation request and the local write set together to the data node device. The local write set of the data node device refers to a write set that needs to be written by the data node device in the global write set of the target transaction.

In a read phase of the target transaction, communication mainly occurs between the coordinator node device and a relevant data node device, and two communications are required for each successful read: the coordinator node device transmits a data read request to the relevant data node device, and the relevant data node device returns a data read result to the coordinator node device. Therefore, in the data read phase, assuming that n (n is an integer greater than 1) is a number of remote reads, at most 2n communications are required. A maximum communication volume may be expressed as n × (data read request message size + data read result message size). In an exemplary embodiment, when the target transaction needs to read data of a plurality of data items of a relevant data node device, data read requests of the plurality of data items are packaged and transmitted, so that the data is read in batches, which saves a number of communications and improves data read efficiency.

In step 207, the data node device acquires a validation result of the target transaction based on the transaction validation request and the local write set transmitted by the coordinator node device, and returns the validation result of the target transaction to the coordinator node device.

After receiving the transaction validation request and the local write set transmitted by the coordinator node device, the data node device validates legitimacy of the target transaction to acquire the validation result of the target transaction. The phase is a transaction legitimacy validation phase prior to transaction commitment.

The validation process of the data node device is a local validation process. A process of acquiring, by the data node device, the validation result of the target transaction based on the transaction validation request and the local write set is a process of performing, by the data node device, a local validation operation. In one possible implementation, the transaction validation request carries a third logical lifecycle, and the third logical lifecycle is an effective logical lifecycle determined by the coordinator node device based on the first logical lifecycle and the second logical lifecycle. The third logical lifecycle is the latest logical lifecycle of the target transaction maintained before the coordinator node device transmits the transaction validation request.

In one possible implementation, in the process of acquiring, by the data node device, the validation result of the target transaction based on the transaction validation request and the local write set, the data node device first updates status information of the target transaction T in the local transaction status list. An update manner involves: T.Bts=max(T.Bts, vrm.Bts), and T.Ets=min(T.Ets, vrm.Ets). vrm.Bts and vrm.Ets in the parentheses are the timestamp lower bound and the timestamp upper bound of the third logical lifecycle carried in the transaction validation request respectively. In this embodiment of this application, before the transaction validation request is received, the logical lifecycle of the target transaction maintained in the local transaction status list of the data node device is the second logical lifecycle. For ease of distinction, a logical lifecycle of the target transaction maintained in the local transaction status list after the transaction validation request is received and before the status information of the target transaction is updated is referred to as a fourth logical lifecycle.

In other words, the data node device takes a maximum value in the timestamp lower bound of the third logical lifecycle and the timestamp lower bound of the second logical lifecycle as a timestamp lower bound of the fourth logical lifecycle of the target transaction; and takes a minimum value in the timestamp upper bound of the third logical lifecycle and the timestamp upper bound of the second logical lifecycle as a timestamp upper bound of the fourth logical lifecycle of the target transaction. Therefore, the fourth logical lifecycle is obtained. The logical lifecycle of the target transaction maintained in the local transaction status list of the data node device is updated herein. The update can be used for transaction concurrent access control, that is, for ensuring transaction consistency.

In an exemplary embodiment, for a serializable isolation level, after the fourth logical lifecycle is determined, whether the fourth logical lifecycle is effective is validated by checking whether the timestamp lower bound of the fourth logical lifecycle is less than the timestamp upper bound of the fourth logical lifecycle.

In response to the timestamp lower bound of the fourth logical lifecycle being no less than the timestamp upper bound of the fourth logical lifecycle, the fourth logical lifecycle is ineffective. In this case, the target transaction is locally invalidated, and the data node device returns a validation result carrying an abort message to the coordinator node device. The abort message is used for trigger global aborting. A process of returning the validation result of the target transaction to the coordinator node device may be regarded as a process of transmitting a local validation reply message lvm to the coordinator node device. In a case where the validation result of the target transaction is the validation result carrying the abort message, an IsAbort field in the local validation reply message lvm is equal to 1, that is, lvm.IsAbort=1.

In response to the timestamp lower bound of the fourth logical lifecycle being less than the timestamp upper bound of the fourth logical lifecycle, the fourth logical lifecycle is effective. In this case, a fifth logical lifecycle of the target transaction is determined based on read transaction related information of to-be-written data items corresponding to the local write set and the fourth logical lifecycle. The fifth logical lifecycle refers to a logical lifecycle obtained by update in the process of validating read-write conflicts for the to-be-written data items in the local write set.

In one possible implementation, the read transaction related information of one to-be-written data item includes at least one of a maximum read transaction timestamp of the to-be-written data item and an endtimestamp of a target read transaction of the to-be-written data item. A maximum read transaction timestamp (denoted as Rts) of one to-be-written data item is used for indicating a maximum value in logical commit timestamps of read transactions that have read the to-be-written data item, the target read transaction of the to-be-written data item is a read transaction locally validated or in a commit phase corresponding to the to-be-written data item, and the endtimestamp of the target read transaction is a timestamp upper bound of a logical lifecycle of the target read transaction.

In an exemplary embodiment, the target read transaction of one to-be-written data item is a read transaction locally validated or in a commit phase in an active transaction set corresponding to the to-be-written data item. The target read transaction of one to-be-written data item may be determined by detecting transaction statuses of read transactions in the active transaction set corresponding to the to-be-written data item.

In one possible implementation, in three different cases of the read transaction related information of one to-be-written data item, a process of determining the fifth logical lifecycle of the target transaction based on read transaction related information of to-be-written data items corresponding to the local write set and the fourth logical lifecycle may vary.

Case 1: The read transaction related information of the to-be-written data item includes a maximum read transaction timestamp of the to-be-written data item.

In the Case 1, the process of determining the fifth logical lifecycle of the target transaction based on read transaction related information of to-be-written data items corresponding to the local write set and the fourth logical lifecycle involves: determining the fifth logical lifecycle of the target transaction based on the maximum read transaction timestamps of the to-be-written data items and the fourth logical lifecycle, a timestamp lower bound of the fifth logical lifecycle being greater than a maximum value in the maximum read transaction timestamps of the to-be-written data items.

The fourth logical lifecycle is the latest logical lifecycle of the target transaction maintained in the local transaction status list of the data node device before the fifth logical lifecycle is determined. In one possible implementation, a manner of determining the fifth logical lifecycle of the target transaction based on the maximum read transaction timestamps of the to-be-written data items and the fourth logical lifecycle involves: adjusting the timestamp lower bound of the fourth logical lifecycle based on the maximum read transaction timestamps of the to-be-written data items, and taking a logical lifecycle obtained after the adjustment as the fifth logical lifecycle.

For example, a manner of adjusting the timestamp lower bound of the fourth logical lifecycle based on the maximum read transaction timestamps of the to-be-written data items involves: the adjusted timestamp lower bound being T.Bts=max(T.Bts, y.Rts+1). In the parentheses, T.Bts denotes the timestamp lower bound of the fourth logical lifecycle, y.Rts denotes the maximum value in the maximum read transaction timestamps of the to-be-written data items, and the value 1 is used for ensuring that the obtained timestamp lower bound of the fifth logical lifecycle is greater than the maximum value in the maximum read transaction timestamps of the to-be-written data items.

In some embodiments, after receiving the local write set, the data node device first detects whether pending write transactions WT of the to-be-written data items corresponding to the local write set are empty. If the pending write transaction WT of a to-be-written data item is not empty, it indicates that another transaction is modifying the to-be-written data item and the transaction has entered a validation phase. In this case, there is a need to abort the target transaction to eliminate read -write conflicts, that is, return a validation result carrying an abort message to the coordinator node device. If the pending write transactions WT of the to-be-written data items are all empty, the TID of the target transaction is assigned to the pending write transactions WT of the to-be-written data items to indicate that the target transaction entering the validation phase needs to modify the to-be-written data items. In the implementation, a lock-free compare and swap (CAS) technology is used to assign a value to a pending write transaction WT of a to-be-written data item y to improve performance. Alternatively, first, the pending write transaction WT of the to-be-written data item y is locked to prevent other concurrent transactions from concurrently modifying y, and then a value is assigned to the locked pending write transaction WT. For example, advisory locking is imposed on the to-be-written data item y. The advisory locking is used for indicating a mutex to the operation of modifying pending write transaction WT of the to-be-written data item y.

Case 2: The read transaction related information of one to-be-written data item includes an endtimestamp of a target read transaction of the to-be-written data item.

In the Case 2, the process of determining the fifth logical lifecycle of the target transaction based on read transaction related information of to-be-written data items corresponding to the local write set and the fourth logical lifecycle involves: determining the fifth logical lifecycle of the target transaction based on the endtimestamps of the target read transactions of the to-be-written data items and the fourth logical lifecycle, a timestamp lower bound of the fifth logical lifecycle being greater than a maximum value in the endtimestamps of the target read transactions of the to-be-written data items.

In one possible implementation, a manner of determining the fifth logical lifecycle of the target transaction based on the endtimestamps of the target read transactions of the to-be-written data items and the fourth logical lifecycle involves: adjusting the timestamp lower bound of the fourth logical lifecycle based on the endtimestamps of the target read transactions of the to-be-written data items, and taking a logical lifecycle obtained after the adjustment as the fifth logical lifecycle. For example, a manner of adjusting the timestamp lower bound of the fourth logical lifecycle based on the endtimestamps of the target read transactions of the to-be-written data items involves: the adjusted timestamp lower bound being T.Bts=max(T.Bts, T1.Ets+1). In the parentheses, T.Bts denotes the timestamp lower bound of the fourth logical lifecycle, T1.Ets denotes the maximum value in the endtimestamps of the target read transactions of the to-be-written data items, and the value 1 is used for ensuring that the obtained timestamp lower bound of the fifth logical lifecycle is greater than the maximum value in the endtimestamps of the target read transactions of the to-be-written data items.

One to-be-written data item may include one or more target read transactions. In a case where one to-be-written data item may include a plurality of target read transactions, T1.Ets denotes a maximum value in endtimestamps of all the target read transactions of all the to-be-written data items.

In this way, a write operation of the target transaction can be delayed after a read operation of the target read transaction to prevent read-write conflicts.

Case 3: The read transaction related information of one to-be-written data item includes a maximum read transaction timestamp of the to-be-written data item and an endtimestamp of a target read transaction of the to-be-written data item.

In the Case 3, the process of determining the fifth logical lifecycle of the target transaction based on read transaction related information of to-be-written data items corresponding to the local write set and the fourth logical lifecycle involves: adjusting the fourth logical lifecycle twice consecutively based on the maximum read transaction timestamps of the to-be-written data items and the endtimestamps of the target read transactions of the to-be-written data items, and taking a logical lifecycle obtained after the two adjustments as the fifth logical lifecycle of the target transaction. A sequence of the two adjustments is not limited in the embodiments of this application. For example, first, the fourth logical lifecycle twice is adjusted based on the maximum read transaction timestamps of the to-be-written data items, and then a logical lifecycle obtained after the adjustment is adjusted based on the endtimestamps of the target read transactions of the to-be-written data items. Certainly, in some embodiments, first, the fourth logical lifecycle twice is adjusted based on the endtimestamps of the target read transactions of the to-be-written data items, and then a logical lifecycle obtained after the adjustment is adjusted based on the maximum read transaction timestamps of the to-be-written data items.

For example, in a case where a logical lifecycle obtained after the two adjustments is taken as the fifth logical lifecycle, after a logical lifecycle is obtained after one adjustment, it is first validated whether a timestamp lower bound of the obtained logical lifecycle is less than a timestamp upper bound in the case of a serializable isolation level, and if yes, next adjustment is continued. If no, local invalidation is directly considered, and a validation result carrying an abort message is returned to the coordinator node device.

After the fifth logical lifecycle is obtained, whether the fifth logical lifecycle is effective is determined by validating whether the timestamp lower bound of the fifth logical lifecycle is less than the timestamp upper bound of the fifth logical lifecycle. A validation result used for indicating Validated is taken as the validation result of the target transaction in response to the fifth logical lifecycle being effective. A validation result used for indicating Invalidated is taken as the validation result of the target transaction in response to the fifth logical lifecycle being ineffective. In a case where the validation result used for indicating Validated is taken as the validation result of the target transaction, a timestamp lower bound Bts and timestamp upper bound Ets of the latest logical lifecycle (i.e., the fifth logical lifecycle) of the target transaction obtained on the data node device are recorded in a local validation reply message lvm of the data node device. For example, the validation result used for indicating Invalidated is a validation result carrying an abort message.

In an exemplary embodiment, when the fifth logical lifecycle is determined to be effective, the target transaction is considered to be locally validated, and the data node device updates status information of the target transaction in the local transaction status list and updates the transaction status of the target transaction to Validated, that is, T. Status=Validated. In an exemplary embodiment, after determining that the target transaction is locally validated, the data node device creates new version data of the to-be-written data items according to updated values of the to-be-written data items. In an exemplary embodiment, a first tag used for indicating that the new version data is not globally committed is set for the created new version data. The new version data with the first tag is not visible to the outside.

If the target transaction is locally invalidated in the data node device, the transaction status of the target transaction in the local transaction status list of the data node device needs to be updated to Aborted, that is, T.Status=Aborted.

In one possible implementation, in addition to including a target read transaction, an active transaction set of one to-be-written data item further includes a running read transaction. A logical lifecycle of the running read transaction needs to be adjusted according to the fifth logical lifecycle of the target transaction, so that the running read transaction cannot read new data written by the target transaction, so as to prevent read-write conflicts and ensure correct execution of the transaction. For example, the running read transaction refers to a transaction whose transaction status is running in the active transaction set. A manner of adjusting the logical lifecycle of the running read transaction involves: making a timestamp upper bound of the logical lifecycle of the running read transaction less than the timestamp lower bound of the fifth logical lifecycle of the target transaction. Assuming that the running read transaction is T2, the updating manner is T2.Ets=min(T2.Ets, T.Bts-1). If a timestamp lower bound of an updated logical lifecycle of a running read transaction is no less than a timestamp upper bound, the running read transaction is notified of aborting.

As can be seen from the above transaction validation phase, during the validation of the target transaction, communication mainly occurs between the coordinator node device and relevant data node devices. The communication mainly includes the following two steps: The coordinator node device transmits a transaction validation request and a local write set to each relevant data node device, and the relevant data node device feeds a validation result back to the coordinator node device. Therefore, in the validation phase of the target transaction, assuming that m (m is an integer no less than 1) is a quantity of data node devices related to the target transaction T, at most 2m communications are required. A maximum communication volume may be expressed as m × (transaction validation request message size+validation result message size)+global write set size.

In step 208, the coordinator node device determines a processing instruction of the target transaction based on the validation result of the target transaction returned by the data node device, and transmits the processing instruction to the data node device, the processing instruction being a commit instruction or an abort instruction.

After receiving the validation result returned by the data node device, the coordinator node device determines, according to the received validation result, whether the target transaction is globally validated, determines the processing instruction of the target transaction, and transmits the processing instruction to the data node device. The processing instruction is a commit instruction or an abort instruction.

In one possible implementation, one or more data node devices are provided. When a plurality of data node devices are provided, each of the data node devices returns a validation result.

In a case where at least two data node devices are provided, a process of determining the processing instruction of the target transaction based on the validation result of the target transaction returned by the data node device involves: taking the abort instruction as the processing instruction of the target transaction in response to at least two validation results returned by the at least two data node devices including a validation result used for indicating Invalidated; taking intersection of logical lifecycles carried in the at least two validation results as a target logical lifecycle in response to the at least two validation results returned by the at least two data node devices indicating Validated; taking the commit instruction as the processing instruction of the target transaction in response to the target logical lifecycle being effective; and taking the abort instruction as the processing instruction of the target transaction in response to the target logical lifecycle being ineffective.

In an exemplary embodiment, the validation result used for indicating Invalidated is a validation result carrying an abort message. If a validation result does not carry the abort message but carries a logical lifecycle (i.e., the fifth logical lifecycle determined in step 207), the validation result indicates Validated. In other words, in a process of determining, by the coordinator node device according to the received validation results, whether the target transaction is globally validated, if the received validation results include at least one validation result carrying an abort message, that is, an lvm whose IsAbort field is equal to 1, it indicates that the target transaction is not wholly locally validated. When the target transaction is globally invalidated, the target transaction needs to be globally aborted. In this case, the abort instruction is taken as the processing instruction of the target transaction. The coordinator node device updates the global transaction status of the target transaction in the first transaction status list to Gaborting. The coordinator node device transmits the abort instruction to the data node device to notify the data node device of local aborting. For example, the processing instruction is transmitted by writing a commit/abort message coarm. When the processing instruction is an abort instruction, an IsAbort field in the coarm is equal to 1, that is, coarm.IsAbort=1.

If the received validation results do not include the validation result carrying the abort message or the received validation results carry logical lifecycles, it indicates that the target transaction is wholly locally validated. In this case, the coordinator node device calculates intersection of the logical lifecycles carried in the received validation results to obtain a target logical lifecycle. If a timestamp lower bound of the target logical lifecycle is no less than a timestamp upper bound of the target logical lifecycle, it indicates that the target logical lifecycle is ineffective, it is determined that the target transaction is globally invalidated, and the target transaction needs to be globally aborted, and the coordinator node device takes the abort instruction as the processing instruction of the target transaction. In addition, the coordinator node device further updates the global transaction status of the target transaction in the first transaction status list to Gaborting, and the coordinator node device transmits the abort instruction to the data node device to notify the data node device of local aborting.

If the timestamp lower bound of the target logical lifecycle is less than the timestamp upper bound of the target logical lifecycle, it indicates that the target logical lifecycle is effective, and it is determined that the target transaction is globally validated. The coordinator node device randomly selects a timestamp from the target logical lifecycle to assign a value to a logical commit timestamp Cts of the target transaction. For example, the timestamp lower bound of the target logical lifecycle is selected as the logical commit timestamp of the target transaction.

After determining the logical commit timestamp, the coordinator node device updates the timestamp lower bound of the target logical lifecycle and the timestamp upper bound of the target logical lifecycle of the target transaction T in the first transaction status list to the logical commit timestamp, that is, T.Bts=T.Ets=T.Cts. In addition, the global transaction status of the target transaction in the first transaction status list is updated to Gcommitted, and the global timestamp generation cluster is requested to assign a global commit timestamp to the target transaction, which is recorded in a global commit timestamp Gts field of the target transaction in the first transaction status list. In addition, the coordinator node device takes the commit instruction as the processing instruction of the target transaction, and transmits the commit instruction to the data node device to notify the data node device of commitment of the target transaction. For example, in a case where the processing instruction is transmitted by writing a commit/abort message coarm, when the processing instruction is a commit instruction, an IsAbort in the coarm is equal to 0, that is, coarm.IsAbort=0. The logical commit timestamp of the target transaction and the global commit timestamp of the target transaction are respectively recorded in Cts and Gts fields in the coarm.

In step 209, the data node device executes, in response to receiving a processing instruction of the target transaction transmitted by the coordinator node device, the processing instruction, the processing instruction being a commit instruction or an abort instruction.

After receiving the processing instruction, the data node device executes the processing instruction. A phase in which the data node device executes the processing instruction is a transaction commit or abort operation finishing phase.

When the processing instruction is the commit instruction, it indicates that the target transaction is globally validated, and a commit phase is entered. That is, updates to the data by the target transaction are persisted to a database, and some subsequent cleaning is performed. In an exemplary embodiment, after the data node device receives the commit instruction transmitted by the coordinator node device, the following operations A to E may be performed.

Operation A: For each data item x corresponding to the local read set of the target transaction, a maximum read transaction timestamp Rts of the data item x is modified, so that the maximum read transaction timestamp Rts of the data item x is greater than or equal to the logical commit timestamp Cts of the target transaction, that is, x.Rts=max(x.Rts,T.Cts). The TID of the target transaction is deleted from the active transaction list RTlist of the data item x.

Operation B: The following operations are performed on each data item y corresponding to the local write set of the target transaction: a) modifying an original creation timestamp Wts of the data item y to the logical commit timestamp of the target transaction T.Cts; b) updating a maximum read transaction timestamp of the data item y to a maximum value in an original maximum read transaction timestamp and the logical commit timestamp of the target transaction, that is, y.Rts=max(y.Rts, T.Cts); c) persisting the data item y to the database, and modifying a tag of the data item y from a first tag to a second tag, the second tag being used for indicating being visible to the outside; d) clearing content of an active transaction list RTlist of the data item y; and e) clearing content of a pending write transaction WT of the data item y.

Operation C: A local read set and a local write set of the target transaction are cleared.

Operation D: The timestamp lower bound and the timestamp upper bound of the logical lifecycle of the target transaction in the local transaction status list are both updated to the logical commit timestamp of the target transaction, that is, T.Bts=T.Ets=T.Cts. The transaction status of the target transaction in the local transaction status list is updated to Committed. The local transaction status list in this case is used for ensuring transaction consistency, without involving synchronization of the global transaction state.

Operation E: An acknowledge character (ACK) indicating Committed is returned to the coordinator node device.

After receiving ACKs indicating Committed returned by all the data node devices, the coordinator node device modifies the global transaction status of the target transaction in the first transaction status list to Gcommitted. Then, the coordinator node device transmits a status information clean instruction to the data node device, so that the data node device deletes status information of the target transaction from the local transaction status list.

When the processing instruction is the abort instruction, it indicates that the target transaction is globally invalidated, and a global abort phase needs to be entered. That is, the target transaction is aborted and corresponding cleaning is performed. For example, content of the cleaning includes: deleting the TID of the target transaction from an active transaction list RTlist of each data item x corresponding to the local read set of the target transaction; cleaning newly created data corresponding to each data item y corresponding to the local write set of the target transaction, and clearing the content of the pending write transaction WT of the data item y; clearing the local read set and the local write set of the target transaction; updating the transaction status of the target transaction in the local transaction status list to Aborted; and returning an ACK indicating Aborted to the coordinator node device.

After receiving ACKs indicating Aborted returned by all the data node devices, the coordinator node device modifies the global transaction status of the target transaction in the first transaction status list to Gaborted. Then, the coordinator node device transmits a status information clean instruction to the data node device, so that the data node device deletes status information of the target transaction from the local transaction status list. In one possible implementation, the coordinator node device transmits the status information clean instruction to the data node devices in batches to reduce a number of communications.

As can be seen from the above content, in a commit/abort phase of the target transaction, communication mainly occurs between the coordinator node device and relevant data node devices. The communication mainly includes the following two steps: The coordinator node device transmits a commit/abort instruction to each relevant data node device, and each relevant data node device transmits a corresponding committed/aborted message (ACK) to the coordinator node device. Therefore, at most 2m communications are conducted in the commit/abort phase. A communication volume is m×(commit/abort instruction message size+committed/aborted message size). m (m is an integer no less than 1) is a quantity of data node devices related to the target transaction T.

The embodiments of this application are introduced based on an example in which the target transaction involves read and write operations. The embodiments of this application are not limited thereto. In a case where the target transaction involves only read operations or only write operations, transactions still can be processed with the transaction processing method according to the embodiments of this application. Details are not described again in the embodiments of this application.

Transaction decentralization is realized based on the transaction processing process in steps 201 to 209, which can resolve the problem of data exceptions caused by conflicting operations among concurrent transactions. From the perspective of an implementation principle, in the transaction processing method according to the embodiments of this application, an optimistic concurrency control (OCC) algorithm framework is mainly used in conjunction with a dynamic timestamp allocation (DTA) algorithm, which reduces data information of transactions transmitted over a network, improves validation efficiency of distributed transactions, and improves concurrent processing capability of the distributed transactions. In addition, multi-version concurrency control (MVCC) is further combined to enable lock-free data read and write, thereby improving concurrent processing capability of local node devices. The DTA algorithm belongs to a timestamp ordering (TO) algorithm. A timestamp lower bound and a timestamp upper bound of a logical lifecycle of a transaction can be adjusted dynamically.

The method according to the embodiments of this application is not affected by a data storage format. The distributed database system in the embodiments of this application supports a key-value data storage format (KV data storage format) (e.g., a data storage format in an HBase database system) and a segment-page data storage format (e.g., a data storage format in a PostgreSQL or MsSQL/InnoDB database system).

In an exemplary embodiment, for the segment-page data storage format, a data buffer is set up in a node device to buffer data transmitted from the shared storage system to speed up next data acquisition. A buffer format is the same as an underlying data storage format. The data transmitted from the shared storage system is buffered in a local data buffer. After a transaction ends, the data is not cleaned until the local data buffer is full, dirty data needs to be flushed back to the shared storage system, or the buffer fails (for example, same data is modified on other node devices).

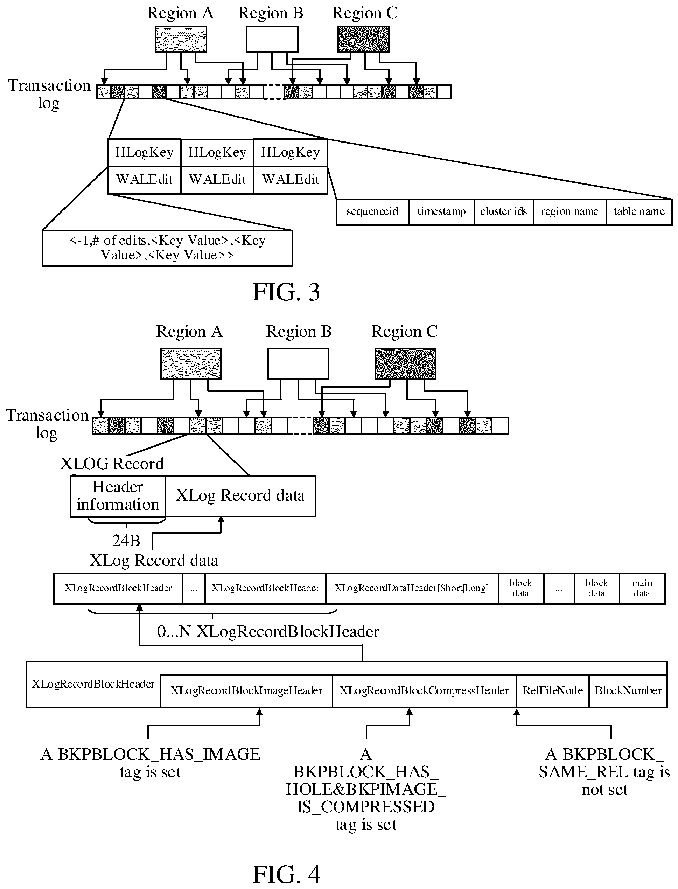

Prior to transaction commitment, each node device calculates a transaction log (such as a WAL log) from the shared storage system, and the transaction log asks the shared storage system for an LSN value, which is a globally unique and increasing value. The transaction log generated during the transaction processing has different formats under different data storage formats. For example, when the data storage format is the KV data storage format, a format of the transaction log is as shown in FIG. 3.

Regions into which a large table maintained by a database system is divided share a log file. A single region is stored in a chronological order in the log, but a plurality of regions may not be stored exactly in a chronological order. A minimum unit of each log is formed by HLogKey and WALEdit. HLogKey is formed by sequenceid, timestamp, cluster ids, region name, table name, and so on. WALEdit is formed by a series of key values. Update operations for all columns in a row (that is, all key values) are included in a same WALEdit object, mainly to achieve atomicity in the case of writing to a row with multiple columns. sequenceid is an auto-increment sequence number of a storage level on which data recovery and log expiration clearing of the regions depend. For example, sequenceid is an LSN value of the transaction log.

For example, when the data storage format is the segment-page data storage format, the format of the transaction log is as shown in FIG. 4. Regions share a log file. A single region is stored in a chronological order in the log, but a plurality of regions may not be stored exactly in a chronological order. The minimum unit of each log is no longer formed by HLogKey and WALEdit, but by an XLog Record.

The XLog Record is formed by two parts. The first part is header information of a fixed size (e.g., 24B (Bytes)), and a corresponding structure is XLogRecord. The second part is XLog Record data.

The XLog Record is divided according to content of stored data, which may be mainly divided into the following three categories.

Category 1: Record for backup block: The record stores a full-write-page block. The record is used for resolving the problem of writing of the page. A data page is changed for the first time after a checkpoint is completed, and the entire page is written when the change is recorded and written into the transaction log file (a corresponding initialization parameter needs to be set, which is on by default).

Category 2: Record for tuple data block: The record is used for storing tuple changes in the page.

Category 3: Record for Checkpoint: When a checkpoint occurs, checkpoint information (including Redo point) is recorded in the transaction log file.

XLog Record Data is a place to store actual data and formed by the following four parts.

Part 1: The part includes 0 to N XLogRecordBlockHeaders, and each XLogRecordBlockHeader corresponds to a piece of block data. If a BKPBLOCK_HAS_IMAGE tag is set, an XLogRecordBlockHeader structure is followed by an XLogRecordBlockImageHeader structure. If a BKPBLOCK_HAS_HOLE&BKPIMAGE_IS_COMPRESSED tag is set, the XLogRecordBlockHeader structure is followed by an XLogRecordBlockCompressHeader structure. If a BKPBLOCK_SAME_REL tag is not set, the XLogRecordBlockHeader structure is followed by RelFileNode. For example, the XLogRecordBlockHeader structure may also be followed by BlockNumber.

Part 2: XLogRecordDataHeader[Short|Long]: If a data size is less than 256 Bytes, a Short format is used; otherwise, a Long format is used.

Part 3: block data: full-write-page data and tuple data. For the full-write-page data, if compression is enabled, the data is compressed and stored. After the compression, metadata related to the page is stored in XLogRecordBlockCompressHeader.

Part 4: main data: Log data such as checkpoint is recorded.

For example, XLog Record is defined as follows:
header information (an XLogRecord structure of a fixed size)
XLogRecordBlockHeader structure
XLogRecordBlockHeader structure
   ...
XLogRecordDataHeader[Short|Long] structure
block data
block data
   ...
main data

In one possible implementation, in a case where the data storage format is the segment-page data storage format, when concurrent transactions are processed on different node devices (ES) and different data items on a same page are modified, page-level conflicts may occur, resulting in a data overwriting problem. For example, a transaction Ta modifies a data item X=2 on a node device ES-1, a transaction Tb modifies a data item X=3 on a node device ES-2, and the data items X=2 and X=3 are on a same page. In this case, a transaction processing mechanism runs concurrent and parallel transactions, and no data exception exists at a transaction level. However, at a page level, a choice of whether to select a transaction log flushed by ES-1 or ES-2 exists, which leads to a problem that changes to a same physical page cannot coexist.

A segment-page list is added to a transaction log that supports the segment-page data storage format, in which addresses of pages (such as a file number, a tablespace number, and relative offset in a file) in the log segment and an ID of a transaction that is performing a write operation on each page are marked. When the transaction log is flushed to the underlying shared storage system, a validation device checks whether pages in a list of all concurrent transactions committed to the shared storage system overlap. If yes, it indicates that the concurrent transactions have written a same page (if a same data item is written, a transaction conflict is detected and resolved by aborting in a transaction validation phase), and different data items are written on the same page. In this case, a page-level conflict occurs and a data overwriting event takes place. A transaction corresponding to one node device ES needs to be aborted to prevent the problem caused by flushing of the transaction log of the node device ES whose corresponding transaction is aborted.

In an exemplary embodiment, the above page-level conflict is validated by a validation device in the distributed database system. The validation device may reside on a same physical machine with any node device or a standalone device, which is not limited in the embodiments of this application.

Based on the transaction processing method according to the embodiments of this application, the distributed database system can support distributed transactions and achieve globally consistent multi-read, can take into account the performance through a decentralized transaction processing technology, and can have good global consistent multi-read and consistent multi-write capabilities with transaction attribute features. Based on the transaction processing method according to the embodiments of this application, a decentralized distributed transaction processing solution can be provided for the distributed database system based on the share-disk architecture, such as an HBase database system under a well-known non-relational SQL (NoSQL, which generally refers to a non-relational database). In this way, database systems similar to HBase have efficient transaction processing capabilities across regions and nodes.

In the embodiments of this application, the coordinator node device configured to coordinate the target transaction is determined according to the transaction allocation indexes respectively corresponding to the node devices. Neither data items involved in transactions nor distribution of the data items needs to be taken into account during transaction allocation. In this way, each node device can coordinate a transaction as a decentralized device, so that the transaction can be processed across nodes, which is conducive to improving efficiency of transaction processing, reliability of transaction processing, and system performance of a database system.

An embodiment of this application provides a transaction processing system. The transaction processing system includes a coordinator node device and a data node device. The coordinator node device is a node device configured to coordinate a target transaction in at least two node devices that share a same storage system. The coordinator node device is determined according to transaction allocation indexes respectively corresponding to the at least two node devices. The data node device is a node device configured to participate in processing the target transaction in the at least two node devices.

The coordinator node device is configured to acquire transaction information of the target transaction; and transmit a data read request to the data node device based on the transaction information of the target transaction.

The data node device is configured to acquire a data read result based on the data read request transmitted by the coordinator node device, and return the data read result to the coordinator node device.

The coordinator node device is further configured to transmit a transaction validation request and a local write set to the data node device in response to the data read result returned by the data node device satisfying a transaction validation condition.

The data node device is further configured to acquire a validation result of the target transaction based on the transaction validation request and the local write set transmitted by the coordinator node device, and return the validation result of the target transaction to the coordinator node device.

The coordinator node device is further configured to determine a processing instruction of the target transaction based on the validation result of the target transaction returned by the data node device, and transmit the processing instruction to the data node device. The processing instruction is a commit instruction or an abort instruction.

The data node device is further configured to execute the processing instruction in response to receiving the processing instruction of the target transaction transmitted by the coordinator node device.

In one possible implementation, the data read result carries a second logical lifecycle. The second logical lifecycle is determined by the data node device according to a first logical lifecycle of the target transaction carried in the data read request. The first logical lifecycle is formed by a timestamp lower bound and a timestamp upper bound. The coordinator node device is further configured to take a maximum value in the timestamp lower bound of the first logical lifecycle and a timestamp lower bound of the second logical lifecycle as a timestamp lower bound of a third logical lifecycle of the target transaction; take a minimum value in the timestamp upper bound of the first logical lifecycle and a timestamp upper bound of the second logical lifecycle as a timestamp upper bound of the third logical lifecycle of the target transaction; and transmit, in response to the third logical lifecycle being effective, a transaction validation request carrying the third logical lifecycle to the data node device. The third logical lifecycle being effective is used for indicating that the timestamp lower bound of the third logical lifecycle is less than the timestamp upper bound of the third logical lifecycle.

In one possible implementation, at least two data node devices are provided, and the coordinator node device is further configured to take the abort instruction as the processing instruction of the target transaction in response to at least two validation results returned by the at least two data node devices including a validation result used for indicating Invalidated; take intersection of logical lifecycles carried in the at least two validation results as a target logical lifecycle in response to the at least two validation results returned by the at least two data node devices indicating Validated; take the commit instruction as the processing instruction of the target transaction in response to the target logical lifecycle being effective; and take the abort instruction as the processing instruction of the target transaction in response to the target logical lifecycle being ineffective.

In one possible implementation, the data read request carries a first logical lifecycle of the target transaction, the first logical lifecycle being formed by a timestamp lower bound and a timestamp upper bound; and the data node device is configured to determine, based on the first logical lifecycle, visible version data of a to-be-read data item indicated by the data read request; determine the second logical lifecycle of the target transaction based on the creation timestamp of the visible version data and the first logical lifecycle; and take a result carrying the second logical lifecycle and the visible version data as the data read result.

In one possible implementation, the transaction validation request carries a third logical lifecycle of the target transaction, the third logical lifecycle being an effective logical lifecycle determined by the coordinator node device based on the first logical lifecycle and the second logical lifecycle; and the data node device is further configured to take a maximum value in the timestamp lower bound of the third logical lifecycle and the timestamp lower bound of the second logical lifecycle as a timestamp lower bound of a fourth logical lifecycle of the target transaction; take a minimum value in the timestamp upper bound of the third logical lifecycle and the timestamp upper bound of the second logical lifecycle as a timestamp upper bound of the fourth logical lifecycle of the target transaction; determine a fifth logical lifecycle of the target transaction based on read transaction related information of to-be-written data items corresponding to the local write set and the fourth logical lifecycle in response to the fourth logical lifecycle being effective; take a validation result used for indicating Validated as the validation result of the target transaction in response to the fifth logical lifecycle being effective; and take a validation result used for indicating Invalidated as the validation result of the target transaction in response to the fifth logical lifecycle being ineffective.

In one possible implementation, the read transaction related information of one of the to-be-written data items includes a maximum read transaction timestamp of the to-be-written data item, the maximum read transaction timestamp of the to-be-written data item being used for indicating a maximum value in logical commit timestamps of read transactions that have read the to-be-written data item; and the data node device is further configured to determine the fifth logical lifecycle of the target transaction based on the maximum read transaction timestamps of the to-be-written data items and the fourth logical lifecycle, a timestamp lower bound of the fifth logical lifecycle being greater than a maximum value in the maximum read transaction timestamps of the to-be-written data items.

In one possible implementation, the read transaction related information of one of the to-be-written data items includes an endtimestamp of a target read transaction of the to-be-written data item, the target read transaction being a read transaction locally validated or in a commit phase, the endtimestamp of the target read transaction being a timestamp upper bound of a logical lifecycle of the target read transaction; and the data node device is further configured to determine the fifth logical lifecycle of the target transaction based on the endtimestamps of the target read transactions of the to-be-written data items and the fourth logical lifecycle, a timestamp lower bound of the fifth logical lifecycle being greater than a maximum value in the endtimestamps of the target read transactions of the to-be-written data items.

The system and method embodiments provided in the foregoing embodiments belong to the same concept. For the specific implementation process, reference may be made to the method embodiments, and details are not described herein again.

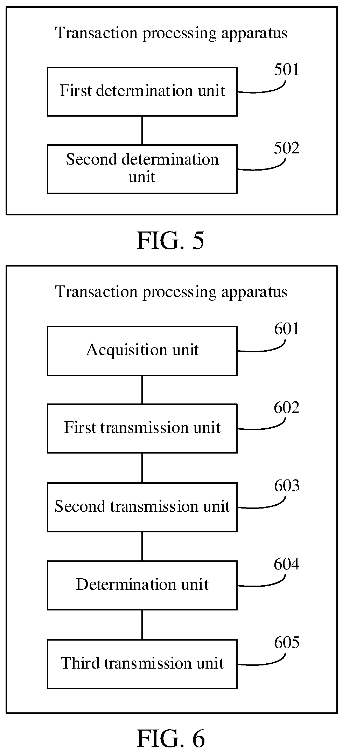

Referring to FIG. 5, an embodiment of this application provides a transaction processing apparatus, including:
a first determination unit 501 configured to determine, in response to an allocation request of a target transaction, transaction allocation indexes respectively corresponding to at least two node devices, the transaction allocation index corresponding to one of the node devices being used for indicating a matching degree of allocation of a new transaction to the node device; and
a second determination unit 502 configured to determine a coordinator node device of the target transaction in the at least two node devices based on the transaction allocation indexes respectively corresponding to the at least two node devices, and coordinate, by the coordinator node device, the target transaction.

In one possible implementation, the first determination unit 501 is configured to determine a transaction allocation mode, the transaction allocation mode including one of allocation based on transaction busyness, allocation based on device busyness, and allocation based on hybrid busyness; and determine the transaction allocation indexes respectively corresponding to the at least two node devices according to a determination manner indicated by the transaction allocation mode.

In one possible implementation, the transaction allocation mode includes the allocation based on hybrid busyness, and the first determination unit 501 is further configured to determine a transaction allocation index corresponding to a first node device based on a transaction processing quantity of the first node device, a device resource utilization rate of the first node device, a transaction processing quantity weight, a device resource utilization rate weight, and a weight adjustment parameter, the first node device being any node device in the at least two node devices.

In one possible implementation, the apparatus further includes:
a transmission unit configured to transmit device ID information of the coordinator node device to a terminal initiating the allocation request, the terminal being configured to transmit transaction information of the target transaction to the coordinator node device according to the device ID information of the coordinator node device, and coordinate, by the coordinator node device, the target transaction based on the transaction information.

In one possible implementation, the distributed database system supports a key-value data storage format and a segment-page data storage format.

In the embodiments of this application, the coordinator node device configured to coordinate the target transaction is determined according to the transaction allocation indexes respectively corresponding to the node devices. Neither data items involved in transactions nor distribution of the data items needs to be taken into account during transaction allocation. In this way, each node device can coordinate a transaction as a decentralized device, so that the transaction can be processed across nodes, which is conducive to improving efficiency of transaction processing, reliability of transaction processing, and system performance of a database system.

Referring to FIG. 6, an embodiment of this application provides a transaction processing apparatus, including:
an acquisition unit 601 configured to acquire transaction information of the target transaction;
a first transmission unit 602 configured to transmit a data read request to a data node device based on the transaction information of the target transaction, the data node device being a node device configured to participate in processing the target transaction in at least two node devices that share a same storage system;
a second transmission unit 603 configured to transmit a transaction validation request and a local write set to the data node device in response to a data read result returned by the data node device satisfying a transaction validation condition;
a determination unit 604 configured to determine a processing instruction of the target transaction based on a validation result of the target transaction returned by the data node device; and
a third transmission unit 605 configured to transmit the processing instruction to the data node device, the processing instruction being a commit instruction or an abort instruction, the data node device being configured to execute the processing instruction.

In one possible implementation, the data read result carries a second logical lifecycle, the second logical lifecycle being determined by the data node device according to a first logical lifecycle of the target transaction carried in the data read request, the first logical lifecycle being formed by a timestamp lower bound and a timestamp upper bound; and the second transmission unit 603 is further configured to take a maximum value in the timestamp lower bound of the first logical lifecycle and a timestamp lower bound of the second logical lifecycle as a timestamp lower bound of a third logical lifecycle of the target transaction; take a minimum value in the timestamp upper bound of the first logical lifecycle and a timestamp upper bound of the second logical lifecycle as a timestamp upper bound of the third logical lifecycle of the target transaction; and transmit, in response to the third logical lifecycle being effective, a transaction validation request carrying the third logical lifecycle to the data node device. The third logical lifecycle being effective is used for indicating that the timestamp lower bound of the third logical lifecycle is less than the timestamp upper bound of the third logical lifecycle.

In one possible implementation, at least two data node devices are provided, and the determination unit 604 is configured to take the abort instruction as the processing instruction of the target transaction in response to at least two validation results returned by the at least two data node devices including a validation result used for indicating Invalidated; take intersection of logical lifecycles carried in the at least two validation results as a target logical lifecycle in response to the at least two validation results returned by the at least two data node devices indicating Validated; take the commit instruction as the processing instruction of the target transaction in response to the target logical lifecycle being effective; and take the abort instruction as the processing instruction of the target transaction in response to the target logical lifecycle being ineffective.

In the embodiments of this application, the coordinator node device configured to coordinate the target transaction is determined according to the transaction allocation indexes respectively corresponding to the node devices. Neither data items involved in transactions nor distribution of the data items needs to be taken into account during transaction allocation. In this way, each node device can coordinate a transaction as a decentralized device, so that the transaction can be processed across nodes, which is conducive to improving efficiency of transaction processing, reliability of transaction processing, and system performance of a database system.

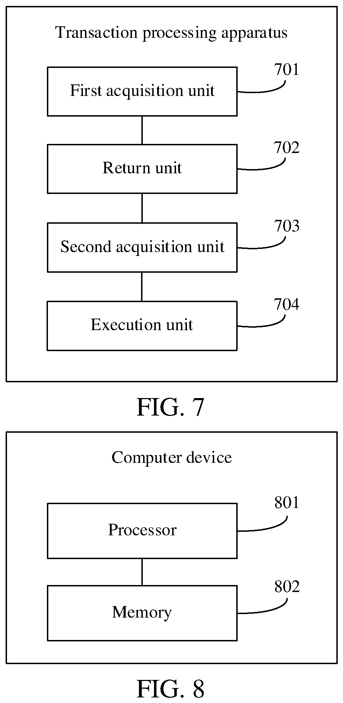

Referring to FIG. 7, an embodiment of this application provides a transaction processing apparatus, including:
a first acquisition unit 701 configured to acquire a data read result based on a data read request transmitted by a coordinator node device, the coordinator node device being a node device configured to coordinate a target transaction in at least two node devices that share a same storage system, the coordinator node device being determined according to transaction allocation indexes respectively corresponding to the at least two node devices;
a return unit 702 configured to return the data read result to the coordinator node device;
a second acquisition unit 703 configured to acquire a validation result of the target transaction based on a transaction validation request and a local write set transmitted by the coordinator node device;
the return unit 702 being further configured to return the validation result of the target transaction to the coordinator node device; and
an execution unit 704 configured to execute, in response to receiving a processing instruction of the target transaction transmitted by the coordinator node device, the processing instruction, the processing instruction being a commit instruction or an abort instruction.

In one possible implementation, the data read request carries a first logical lifecycle of the target transaction, the first logical lifecycle being formed by a timestamp lower bound and a timestamp upper bound; and the first acquisition unit 701 is configured to determine, based on the first logical lifecycle, visible version data of a to-be-read data item indicated by the data read request; determine the second logical lifecycle of the target transaction based on the creation timestamp of the visible version data and the first logical lifecycle; and take a result carrying the second logical lifecycle and the visible version data as the data read result.

In one possible implementation, the transaction validation request carries a third logical lifecycle of the target transaction, the third logical lifecycle being an effective logical lifecycle determined by the coordinator node device based on the first logical lifecycle and the second logical lifecycle; and the second transmission unit 703 is configured to take a maximum value in the timestamp lower bound of the third logical lifecycle and the timestamp lower bound of the second logical lifecycle as a timestamp lower bound of a fourth logical lifecycle of the target transaction; take a minimum value in the timestamp upper bound of the third logical lifecycle and the timestamp upper bound of the second logical lifecycle as a timestamp upper bound of the fourth logical lifecycle of the target transaction; determine a fifth logical lifecycle of the target transaction based on read transaction related information of to-be-written data items corresponding to the local write set and the fourth logical lifecycle in response to the fourth logical lifecycle being effective; take a validation result used for indicating Validated as the validation result of the target transaction in response to the fifth logical lifecycle being effective; and take a validation result used for indicating Invalidated as the validation result of the target transaction in response to the fifth logical lifecycle being ineffective.

In one possible implementation, the read transaction related information of one of the to-be-written data items includes a maximum read transaction timestamp of the to-be-written data item, the maximum read transaction timestamp of the to-be-written data item being used for indicating a maximum value in logical commit timestamps of read transactions that have read the to-be-written data item; and the second acquisition unit 703 is further configured to determine the fifth logical lifecycle of the target transaction based on the maximum read transaction timestamps of the to-be-written data items and the fourth logical lifecycle, a timestamp lower bound of the fifth logical lifecycle being greater than a maximum value in the maximum read transaction timestamps of the to-be-written data items.

In one possible implementation, the read transaction related information of one of the to-be-written data items includes an endtimestamp of a target read transaction of the to-be-written data item, the target read transaction being a read transaction locally validated or in a commit phase, the endtimestamp of the target read transaction being a timestamp upper bound of a logical lifecycle of the target read transaction; and the second acquisition unit 703 is further configured to determine the fifth logical lifecycle of the target transaction based on the endtimestamps of the target read transactions of the to-be-written data items and the fourth logical lifecycle, a timestamp lower bound of the fifth logical lifecycle being greater than a maximum value in the endtimestamps of the target read transactions of the to-be-written data items.

In the embodiments of this application, the coordinator node device configured to coordinate the target transaction is determined according to the transaction allocation indexes respectively corresponding to the node devices. Neither data items involved in transactions nor distribution of the data items needs to be taken into account during transaction allocation. In this way, each node device can coordinate a transaction as a decentralized device, so that the transaction can be processed across nodes, which is conducive to improving efficiency of transaction processing, reliability of transaction processing, and system performance of a database system.

the apparatus provided in the foregoing embodiments implements functions of the apparatus, the division of the foregoing functional units is merely an example for description. In the practical application, the functions may be assigned to and completed by different functional units according to the requirements, that is, the internal structure of the device is divided into different functional units, to implement all or some of the functions described above. In addition, the apparatus and method embodiments provided in the foregoing embodiments belong to the same conception. For the specific implementation process, reference may be made to the method embodiments, and details are not described herein again.

FIG. 8 is a schematic structural diagram of a computer device according to an embodiment of this application. The computer device may vary a lot due to different configurations or performance, and may include one or more processors (Central Processing Units, CPUs) 801 and one or more memories 802. The one or more memories 802 stores at least one computer program, the at least one computer program being loaded and executed by the one or more processors 801, to cause the computer device to implement the transaction processing method provided in the foregoing method embodiments. Certainly, the computer device may also have components such as a wired or wireless network interface, a keyboard, and an input/output interface for ease of input/output, and may further include other components for implementing functions of the device. Details are not described herein again.

In an exemplary embodiment, a non-transitory computer-readable storage medium is further provided, storing at least one computer program, the at least one computer program being loaded and executed by a processor of a computer device to cause a computer to implement the foregoing transaction processing method.

In a possible implementation, the non-transitory computer-readable storage medium may be a read-only memory (ROM), a random access memory (random-access memory, RAM), a compact disc read-only memory (CD-ROM), a magnetic tape, a floppy disk, an optical data storage device, and the like.

In an exemplary embodiment, a computer program product or a computer program is provided. The computer program product or the computer program includes computer instructions, and the computer instructions are stored in a computer-readable storage medium. A processor of a computer device reads the computer instructions from the computer-readable storage medium and executes the computer instructions to cause the computer device to perform the foregoing transaction processing method.

It is to be understood that, in this application, the term"at least one" means one or more, and "a plurality of" or "at least two" means two or more. And/or" describes an association relationship of associated objects and indicates that three relationships may exist. For example, A and/or B may represent the following three cases: Only A exists, both A and B exist, and only B exists. The character "/" generally indicates an "or" relationship between the associated objects.

## Claims

1. A transaction processing method, applied to a transaction allocation device, the transaction allocation device is in a distributed database system based on a shared storage architecture, the distributed database system further comprising at least two node devices sharing a same storage system, the shared storage system is used for the node device to invoke data from the shared storage system according to a demand of transaction information of a transaction, the method comprising:
determining, in response to an allocation request of a target transaction, a transaction allocation mode to be adopted when the allocation request of the target transaction is received, wherein the transaction allocation mode is used for indicating a determination manner of determining the transaction allocation indexes corresponding to the node devices, and in different determination manners, the calculation parameters and calculation methods used for determining the transaction allocation indexes are different;
determining, according to the determination manner indicated by the transaction allocation mode, transaction allocation indexes corresponding to the at least two node devices, wherein transaction allocation indexes respectively corresponding to the at least two node devices, the transaction allocation index indicating a matching degree of allocation of a new transaction to the respective node device (201); and
determining a coordinator node device of the target transaction in the at least two node devices based on the transaction allocation indexes respectively corresponding to the at least two node devices, and coordinating, by the coordinator node device, the target transaction (202).

2. The method according to claim 1, wherein the transaction allocation mode comprising one of allocation based on transaction busyness, allocation based on device busyness, and allocation based on hybrid busyness;
wherein, preferably, the transaction allocation mode comprises the allocation based on hybrid busyness, and the determining the transaction allocation indexes respectively corresponding to the at least two node devices according to a determination manner indicated by the transaction allocation mode comprises:
determining a transaction allocation index corresponding to a first node device based on a transaction processing quantity of the first node device, a device resource utilization rate of the first node device, a transaction processing quantity weight, a device resource utilization rate weight, and a weight adjustment parameter, the first node device being any node device in the at least two node devices.

3. The method according to any one of claims 1 to 2, wherein after the determining a coordinator node device of the target transaction in the at least two node devices, the method further comprises:
transmitting device ID information of the coordinator node device to a terminal initiating the allocation request, the terminal being configured to transmit transaction information of the target transaction to the coordinator node device according to the device ID information of the coordinator node device, and coordinating, by the coordinator node device, the target transaction based on the transaction information.

4. The method according to any one of claims 1 to 2, wherein the distributed database system supports a key-value data storage format and a segment-page data storage format.

5. A transaction processing method, applied to a coordinator node device, the coordinator node device being a node device configured to coordinate a target transaction in at least two node devices that share a same storage system, the shared storage system is used for the node device to invoke data from the shared storage system according to a demand of transaction information of a transaction, the coordinator node device being determined according to transaction allocation indexes respectively corresponding to the at least two node devices, the method comprising:
acquiring transaction information of the target transaction (203);
transmitting a data read request to a data node device based on the transaction information of the target transaction, the data node device being a node device configured to participate in processing the target transaction in the at least two node devices (204);
transmitting a transaction validation request and a local write set to the data node device in response to a data read result returned by the data node device satisfying a transaction validation condition (206); and
determining a processing instruction of the target transaction based on a validation result of the target transaction returned by the data node device, and transmitting the processing instruction to the data node device, the processing instruction being a commit instruction or an abort instruction, the data node device being configured to execute the processing instruction (208);
wherein the transaction allocation indexes is determined based on a transaction allocation mode, wherein the transaction allocation mode is used for indicating a determination manner of determining the transaction allocation indexes corresponding to the node devices, and in different determination manners, the calculation parameters and calculation methods used for determining the transaction allocation indexes are different.

6. The method according to claim 5, wherein the data read result carries a second logical lifecycle, the second logical lifecycle being determined by the data node device according to a first logical lifecycle of the target transaction carried in the data read request, the first logical lifecycle being formed by a timestamp lower bound and a timestamp upper bound; and the transmitting a transaction validation request to the data node device in response to a data read result returned by the data node device satisfying a transaction validation condition comprises:
taking a maximum value in the timestamp lower bound of the first logical lifecycle and a timestamp lower bound of the second logical lifecycle as a timestamp lower bound of a third logical lifecycle of the target transaction; taking a minimum value in the timestamp upper bound of the first logical lifecycle and a timestamp upper bound of the second logical lifecycle as a timestamp upper bound of the third logical lifecycle of the target transaction; and
transmitting, in response to the third logical lifecycle being effective, a transaction validation request carrying the third logical lifecycle to the data node device, the third logical lifecycle being effective being used for indicating that the timestamp lower bound of the third logical lifecycle is less than the timestamp upper bound of the third logical lifecycle.

7. The method according to claim 5 or 6, wherein at least two data node devices are provided, and the determining a processing instruction of the target transaction based on a validation result of the target transaction returned by the data node device comprises:
taking the abort instruction as the processing instruction of the target transaction in response to at least two validation results returned by the at least two data node devices comprising a validation result used for indicating Invalidated;
taking intersection of logical lifecycles carried in the at least two validation results as a target logical lifecycle in response to the at least two validation results returned by the at least two data node devices indicating Validated;
taking the commit instruction as the processing instruction of the target transaction in response to the target logical lifecycle being effective; and taking the abort instruction as the processing instruction of the target transaction in response to the target logical lifecycle being ineffective.

8. A transaction processing method, applied to a data node device, the data node device being a node device configured to participate in processing a target transaction in at least two node devices that share a same storage system, the shared storage system is used for the node device to invoke data from the shared storage system according to a demand of transaction information of a transaction, the method comprising:
acquiring a data read result based on a data read request transmitted by a coordinator node device, and returning the data read result to the coordinator node device, the coordinator node device being determined according to transaction allocation indexes respectively corresponding to the at least two node devices (205);
acquiring a validation result of the target transaction based on a transaction validation request and a local write set transmitted by the coordinator node device, and returning the validation result of the target transaction to the coordinator node device (207); and
executing, in response to receiving a processing instruction of the target transaction transmitted by the coordinator node device, the processing instruction, the processing instruction being a commit instruction or an abort instruction (209);
wherein the transaction allocation indexes is determined based on a transaction allocation mode, wherein the transaction allocation mode is used for indicating a determination manner of determining the transaction allocation indexes corresponding to the node devices, and in different determination manners, the calculation parameters and calculation methods used for determining the transaction allocation indexes are different.

9. The method according to claim 8, wherein the data read request carries a first logical lifecycle of the target transaction, the first logical lifecycle being formed by a timestamp lower bound and a timestamp upper bound; and the acquiring a data read result based on a data read request transmitted by a coordinator node device comprises:
determining, based on the first logical lifecycle, visible version data of a to-be-read data item indicated by the data read request;
determining a second logical lifecycle of the target transaction based on a creation timestamp of the visible version data and the first logical lifecycle; and
taking a result carrying the second logical lifecycle and the visible version data as the data read result.
wherein, preferably, the transaction validation request carries a third logical lifecycle of the target transaction, the third logical lifecycle being an effective logical lifecycle determined by the coordinator node device based on the first logical lifecycle and the second logical lifecycle; and the acquiring a validation result of the target transaction based on a transaction validation request and a local write set transmitted by the coordinator node device comprises:
taking a maximum value in a timestamp lower bound of the third logical lifecycle and a timestamp lower bound of the second logical lifecycle as a timestamp lower bound of a fourth logical lifecycle of the target transaction; taking a minimum value in a timestamp upper bound of the third logical lifecycle and a timestamp upper bound of the second logical lifecycle as a timestamp upper bound of the fourth logical lifecycle of the target transaction;
determining a fifth logical lifecycle of the target transaction based on read transaction related information of to-be-written data items corresponding to the local write set and the fourth logical lifecycle in response to the fourth logical lifecycle being effective;
taking a validation result used for indicating Validated as the validation result of the target transaction in response to the fifth logical lifecycle being effective; and taking a validation result used for indicating Invalidated as the validation result of the target transaction in response to the fifth logical lifecycle being ineffective.

10. The method according to claim 8, wherein
in the case that the read transaction related information of one of the to-be-written data items comprises a maximum read transaction timestamp of the to-be-written data item, the maximum read transaction timestamp of the to-be-written data item being used for indicating a maximum value in logical commit timestamps of read transactions that have read the to-be-written data item; and the determining a fifth logical lifecycle of the target transaction based on read transaction related information of to-be-written data items corresponding to the local write set and the fourth logical lifecycle comprises: determining the fifth logical lifecycle of the target transaction based on the maximum read transaction timestamps of the to-be-written data items and the fourth logical lifecycle, a timestamp lower bound of the fifth logical lifecycle being greater than a maximum value in the maximum read transaction timestamps of the to-be-written data items; or
in the case that the read transaction related information of one of the to-be-written data items comprises an endtimestamp of a target read transaction of the to-be-written data item, the target read transaction being a read transaction locally validated or in a commit phase, the endtimestamp of the target read transaction being a timestamp upper bound of a logical lifecycle of the target read transaction; and the determining a fifth logical lifecycle of the target transaction based on read transaction related information of to-be-written data items corresponding to the local write set and the fourth logical lifecycle comprises: determining the fifth logical lifecycle of the target transaction based on the endtimestamps of the target read transactions of the to-be-written data items and the fourth logical lifecycle, a timestamp lower bound of the fifth logical lifecycle being greater than a maximum value in the endtimestamps of the target read transactions of the to-be-written data items.

11. A transaction processing system, the transaction processing system comprising a coordinator node device and a data node device, the coordinator node device being a node device configured to coordinate a target transaction in at least two node devices that share a same storage system, the shared storage system is used for the node device to invoke data from the shared storage system according to a demand of transaction information of a transaction, the coordinator node device being determined according to transaction allocation indexes respectively corresponding to the at least two node devices, the data node device being a node device configured to participate in processing the target transaction in the at least two node devices;
the coordinator node device being configured to acquire transaction information of the target transaction; and transmit a data read request to the data node device based on the transaction information of the target transaction;
the data node device being configured to acquire a data read result based on the data read request transmitted by the coordinator node device, and return the data read result to the coordinator node device;
the coordinator node device being further configured to transmit a transaction validation request and a local write set to the data node device in response to the data read result returned by the data node device satisfying a transaction validation condition;
the data node device being further configured to acquire a validation result of the target transaction based on the transaction validation request and the local write set transmitted by the coordinator node device, and return the validation result of the target transaction to the coordinator node device;
the coordinator node device being further configured to determine a processing instruction of the target transaction based on the validation result of the target transaction returned by the data node device, and transmit the processing instruction to the data node device, the processing instruction being a commit instruction or an abort instruction; and
the data node device being further configured to execute the processing instruction in response to receiving the processing instruction of the target transaction transmitted by the coordinator node device;
wherein the transaction allocation indexes is determined based on a transaction allocation mode, wherein the transaction allocation mode is used for indicating a determination manner of determining the transaction allocation indexes corresponding to the node devices, and in different determination manners, the calculation parameters and calculation methods used for determining the transaction allocation indexes are different.

12. A computer device, comprising a processor and a memory, the memory storing at least one computer program, the at least one computer program being loaded and executed by the processor, to cause the computer device to implement the transaction processing method according to any one of claims 1 to 5, or the transaction processing method according to any one of claims 6 to 8, or the transaction processing method according to any one of claims 9 to 13.

13. A non-transitory computer-readable storage medium, storing at least one computer program, the at least one computer program being loaded and executed by a processor to cause a computer to implement the transaction processing method according to any one of claims 1 to 4, or the transaction processing method according to any one of claims 5 to 7, or the transaction processing method according to any one of claims 8 to 10.

14. A computer program product, the computer program product comprising computer instructions, the computer instructions being stored in a computer-readable storage medium, a processor of a computer device reading the computer instructions from the computer-readable storage medium, and the processor executing the computer instructions to cause the computer device to perform the transaction processing method according to any one of claims 1 to 4, or the transaction processing method according to any one of claims 5 to 7, or the transaction processing method according to any one of claims 8 to 10.

## Patentansprüche

1. Transaktionsverarbeitungsverfahren, angewendet auf eine Transaktionszuteilungsvorrichtung, wobei die Transaktionszuteilungsvorrichtung in einem verteilten Datenbanksystem basierend auf einer Shared-Storage-Architektur ist, wobei das verteilte Datenbanksystem ferner mindestens zwei Knotenvorrichtungen umfasst, die dasselbe Speichersystem teilen, wobei das gemeinsam genutzte Speichersystem dazu verwendet wird, dass die Knotenvorrichtung Daten aus dem gemeinsam genutzten Speichersystem gemäß einem Bedarf an Transaktionsinformation einer Transaktion abruft, wobei das Verfahren umfasst:
Bestimmen, als Reaktion auf eine Zuteilungsanforderung einer Zieltransaktion, eines zu verwendenden Transaktionszuteilungsmodus, wenn die Zuteilungsanforderung der Zieltransaktion empfangen wird, wobei der Transaktionszuteilungsmodus zum Anzeigen einer Bestimmungsweise des Bestimmens der den Knotenvorrichtungen entsprechenden Transaktionszuteilungsindizes verwendet wird, und in verschiedenen Bestimmungsweisen die zum Bestimmen der Transaktionszuteilungsindizes verwendeten Berechnungsparameter und Berechnungsverfahren verschieden sind;
Bestimmen, gemäß der durch den Transaktionszuteilungsmodus angezeigten Bestimmungsweise, von Transaktionszuteilungsindizes, die den mindestens zwei Knotenvorrichtungen entsprechen, wobei die den mindestens zwei Knotenvorrichtungen jeweils entsprechenden Transaktionszuteilungsindizes einen Übereinstimmungsgrad der Zuteilung einer neuen Transaktion zur jeweiligen Knotenvorrichtung (201) anzeigen; und
Bestimmen einer Koordinatorknotenvorrichtung der Zieltransaktion in den mindestens zwei Knotenvorrichtungen basierend auf den den mindestens zwei Knotenvorrichtungen jeweils entsprechenden Transaktionszuteilungsindizes und Koordinieren der Zieltransaktion (202) durch die Koordinatorknotenvorrichtung.

2. Verfahren nach Anspruch 1, wobei der Transaktionszuteilungsmodus eine von auf Transaktionsauslastung basierender Zuteilung, auf Geräteauslastung basierender Zuteilung und auf hybrider Auslastung basierender Zuteilung umfasst;
wobei, vorzugsweise, der Transaktionszuteilungsmodus die auf hybrider Auslastung basierende Zuteilung umfasst und das Bestimmen der den mindestens zwei Knotenvorrichtungen jeweils entsprechenden Transaktionszuteilungsindizes gemäß einer durch den Transaktionszuteilungsmodus angezeigten Bestimmungsweise umfasst:
Bestimmen eines einer ersten Knotenvorrichtung entsprechenden Transaktionszuteilungsindex basierend auf einer Transaktionsverarbeitungsanzahl der ersten Knotenvorrichtung, einer Geräteressourcenauslastungsrate der ersten Knotenvorrichtung, einem Gewichtungsfaktor der Transaktionsverarbeitungsanzahl, einem Gewichtungsfaktor der Geräteressourcenauslastungsrate und einem Gewichtsanpassungsparameter, wobei die erste Knotenvorrichtung eine beliebige Knotenvorrichtung in den mindestens zwei Knotenvorrichtungen ist.

3. Verfahren nach einem der Ansprüche 1 bis 2, wobei das Verfahren nach dem Bestimmen einer Koordinatorknotenvorrichtung der Zieltransaktion in den mindestens zwei Knotenvorrichtungen ferner umfasst:
Übertragen von Geräte-ID-Information der Koordinatorknotenvorrichtung an ein Endgerät, das die Zuteilungsanforderung initiiert, wobei das Endgerät dazu konfiguriert ist, Transaktionsinformation der Zieltransaktion gemäß der Geräte-ID-Information der Koordinatorknotenvorrichtung an die Koordinatorknotenvorrichtung zu übertragen, und die Koordinatorknotenvorrichtung die Zieltransaktion basierend auf der Transaktionsinformation koordiniert.

4. Verfahren nach einem der Ansprüche 1 bis 2, wobei das verteilte Datenbanksystem ein Schlüssel-Wert-Datenspeicherformat und ein Segment-Seiten-Datenspeicherformat unterstützt.

5. Transaktionsverarbeitungsverfahren, angewendet auf eine Koordinatorknotenvorrichtung, wobei die Koordinatorknotenvorrichtung eine Knotenvorrichtung ist, die dazu konfiguriert ist, eine Zieltransaktion in mindestens zwei Knotenvorrichtungen, die dasselbe Speichersystem teilen, zu koordinieren, wobei das gemeinsam genutzte Speichersystem dazu verwendet wird, dass die Knotenvorrichtung Daten aus dem gemeinsam genutzten Speichersystem gemäß einem Bedarf an Transaktionsinformation einer Transaktion abruft, wobei die Koordinatorknotenvorrichtung gemäß den den mindestens zwei Knotenvorrichtungen jeweils entsprechenden Transaktionszuteilungsindizes bestimmt wird, wobei das Verfahren umfasst:
Abrufen von Transaktionsinformation der Zieltransaktion (203);
Übertragen einer Datenleseanforderung an eine Datenknotenvorrichtung basierend auf der Transaktionsinformation der Zieltransaktion, wobei die Datenknotenvorrichtung eine Knotenvorrichtung ist, die dazu konfiguriert ist, an der Verarbeitung der Zieltransaktion in den mindestens zwei Knotenvorrichtungen (204) teilzunehmen;
Übertragen einer Transaktionsvalidierungsanforderung und einer lokalen Schreibmenge an die Datenknotenvorrichtung als Reaktion darauf, dass ein von der Datenknotenvorrichtung zurückgegebenes Datenleseergebnis eine Transaktionsvalidierungsbedingung erfüllt (206); und
Bestimmen einer Verarbeitungsanweisung der Zieltransaktion basierend auf einem von der Datenknotenvorrichtung zurückgegebenen Validierungsergebnis der Zieltransaktion und Übertragen der Verarbeitungsanweisung an die Datenknotenvorrichtung, wobei die Verarbeitungsanweisung eine Festschreibungsanweisung oder eine Abbruchanweisung ist, wobei die Datenknotenvorrichtung dazu konfiguriert ist, die Verarbeitungsanweisung auszuführen (208);
wobei die Transaktionszuteilungsindizes basierend auf einem Transaktionszuteilungsmodus bestimmt werden, wobei der Transaktionszuteilungsmodus zum Anzeigen einer Bestimmungsweise des Bestimmens der den Knotenvorrichtungen entsprechenden Transaktionszuteilungsindizes verwendet wird, und in verschiedenen Bestimmungsweisen die zum Bestimmen der Transaktionszuteilungsindizes verwendeten Berechnungsparameter und Berechnungsverfahren verschieden sind.

6. Verfahren nach Anspruch 5, wobei das Datenleseergebnis einen zweiten logischen Lebenszyklus trägt, wobei der zweite logische Lebenszyklus durch die Datenknotenvorrichtung gemäß einem ersten logischen Lebenszyklus der Zieltransaktion, der in der Datenleseanforderung enthalten ist, bestimmt wird, wobei der erste logische Lebenszyklus durch eine Zeitstempeluntergrenze und eine Zeitstempelobergrenze gebildet wird; und das Übertragen einer Transaktionsvalidierungsanforderung an die Datenknotenvorrichtung als Reaktion darauf, dass ein von der Datenknotenvorrichtung zurückgegebenes Datenleseergebnis eine Transaktionsvalidierungsbedingung erfüllt, umfasst:
Nehmen eines Maximalwerts aus der Zeitstempeluntergrenze des ersten logischen Lebenszyklus und einer Zeitstempeluntergrenze des zweiten logischen Lebenszyklus als Zeitstempeluntergrenze eines dritten logischen Lebenszyklus der Zieltransaktion; Nehmen eines Minimalwerts aus der Zeitstempelobergrenze des ersten logischen Lebenszyklus und einer Zeitstempelobergrenze des zweiten logischen Lebenszyklus als Zeitstempelobergrenze des dritten logischen Lebenszyklus der Zieltransaktion; und
Übertragen, als Reaktion darauf, dass der dritte logische Lebenszyklus wirksam ist, einer Transaktionsvalidierungsanforderung, die den dritten logischen Lebenszyklus trägt, an die Datenknotenvorrichtung, wobei das Wirksamsein des dritten logischen Lebenszyklus zum Anzeigen verwendet wird, dass die Zeitstempeluntergrenze des dritten logischen Lebenszyklus kleiner als die Zeitstempelobergrenze des dritten logischen Lebenszyklus ist.

7. Verfahren nach Anspruch 5 oder 6, wobei mindestens zwei Datenknotenvorrichtungen vorgesehen sind, und das Bestimmen einer Verarbeitungsanweisung der Zieltransaktion basierend auf einem von der Datenknotenvorrichtung zurückgegebenen Validierungsergebnis der Zieltransaktion umfasst:
Nehmen der Abbruchanweisung als die Verarbeitungsanweisung der Zieltransaktion als Reaktion darauf, dass mindestens zwei von den mindestens zwei Datenknotenvorrichtungen zurückgegebene Validierungsergebnisse ein zum Anzeigen von Ungültig verwendetes Validierungsergebnis umfassen;
Nehmen der Schnittmenge der logischen Lebenszyklen, die in den mindestens zwei Validierungsergebnissen enthalten sind, als logischen Ziel-Lebenszyklus als Reaktion darauf, dass die von den mindestens zwei Datenknotenvorrichtungen zurückgegebenen mindestens zwei Validierungsergebnisse Gültig anzeigen;
Nehmen der Festschreibungsanweisung als die Verarbeitungsanweisung der Zieltransaktion als Reaktion darauf, dass der logische Ziel-Lebenszyklus wirksam ist; und Nehmen der Abbruchanweisung als die Verarbeitungsanweisung der Zieltransaktion als Reaktion darauf, dass der logische Ziel-Lebenszyklus unwirksam ist.

8. Transaktionsverarbeitungsverfahren, angewendet auf eine Datenknotenvorrichtung, wobei die Datenknotenvorrichtung eine Knotenvorrichtung ist, die dazu konfiguriert ist, an der Verarbeitung einer Zieltransaktion in mindestens zwei Knotenvorrichtungen, die dasselbe Speichersystem teilen, teilzunehmen, wobei das gemeinsam genutzte Speichersystem dazu verwendet wird, dass die Knotenvorrichtung Daten aus dem gemeinsam genutzten Speichersystem gemäß einem Bedarf an Transaktionsinformation einer Transaktion abruft, wobei das Verfahren umfasst:
Abrufen eines Datenleseergebnisses basierend auf einer von einer Koordinatorknotenvorrichtung übertragenen Datenleseanforderung und Zurückgeben des Datenleseergebnisses an die Koordinatorknotenvorrichtung, wobei die Koordinatorknotenvorrichtung gemäß den den mindestens zwei Knotenvorrichtungen (205) jeweils entsprechenden Transaktionszuteilungsindizes bestimmt wird;
Abrufen eines Validierungsergebnisses der Zieltransaktion basierend auf einer Transaktionsvalidierungsanforderung und einer von der Koordinatorknotenvorrichtung übertragenen lokalen Schreibmenge und Zurückgeben des Validierungsergebnisses der Zieltransaktion an die Koordinatorknotenvorrichtung (207); und
Ausführen, als Reaktion auf das Empfangen einer von der Koordinatorknotenvorrichtung übertragenen Verarbeitungsanweisung der Zieltransaktion, der Verarbeitungsanweisung, wobei die Verarbeitungsanweisung eine Festschreibungsanweisung oder eine Abbruchanweisung ist (209);
wobei die Transaktionszuteilungsindizes basierend auf einem Transaktionszuteilungsmodus bestimmt werden, wobei der Transaktionszuteilungsmodus zum Anzeigen einer Bestimmungsweise des Bestimmens der den Knotenvorrichtungen entsprechenden Transaktionszuteilungsindizes verwendet wird, und in verschiedenen Bestimmungsweisen die zum Bestimmen der Transaktionszuteilungsindizes verwendeten Berechnungsparameter und Berechnungsverfahren verschieden sind.

9. Verfahren nach Anspruch 8, wobei die Datenleseanforderung einen ersten logischen Lebenszyklus der Zieltransaktion trägt, wobei der erste logische Lebenszyklus durch eine Zeitstempeluntergrenze und eine Zeitstempelobergrenze gebildet wird; und das Abrufen eines Datenleseergebnisses basierend auf einer von einer Koordinatorknotenvorrichtung übertragenen Datenleseanforderung umfasst:
Bestimmen, basierend auf dem ersten logischen Lebenszyklus, sichtbarer Versionsdaten eines durch die Datenleseanforderung angezeigten zu lesenden Datenelements;
Bestimmen eines zweiten logischen Lebenszyklus der Zieltransaktion basierend auf einem Erstellungszeitstempel der sichtbaren Versionsdaten und dem ersten logischen Lebenszyklus; und
Nehmen eines Ergebnisses, das den zweiten logischen Lebenszyklus und die sichtbaren Versionsdaten trägt, als das Datenleseergebnis.
wobei, vorzugsweise, die Transaktionsvalidierungsanforderung einen dritten logischen Lebenszyklus der Zieltransaktion trägt, wobei der dritte logische Lebenszyklus ein wirksamer logischer Lebenszyklus ist, der durch die Koordinatorknotenvorrichtung basierend auf dem ersten logischen Lebenszyklus und dem zweiten logischen Lebenszyklus bestimmt wird; und das Abrufen eines Validierungsergebnisses der Zieltransaktion basierend auf einer Transaktionsvalidierungsanforderung und einer von der Koordinatorknotenvorrichtung übertragenen lokalen Schreibmenge umfasst:
Nehmen eines Maximalwerts aus der Zeitstempeluntergrenze des dritten logischen Lebenszyklus und einer Zeitstempeluntergrenze des zweiten logischen Lebenszyklus als Zeitstempeluntergrenze eines vierten logischen Lebenszyklus der Zieltransaktion; Nehmen eines Minimalwerts aus der Zeitstempelobergrenze des dritten logischen Lebenszyklus und einer Zeitstempelobergrenze des zweiten logischen Lebenszyklus als Zeitstempelobergrenze des vierten logischen Lebenszyklus der Zieltransaktion;
Bestimmen eines fünften logischen Lebenszyklus der Zieltransaktion basierend auf lesetransaktionsbezogener Information von der lokalen Schreibmenge entsprechenden zu schreibenden Datenelementen und dem vierten logischen Lebenszyklus als Reaktion darauf, dass der vierte logische Lebenszyklus wirksam ist;
Nehmen eines zum Anzeigen von Gültig verwendeten Validierungsergebnisses als das Validierungsergebnis der Zieltransaktion als Reaktion darauf, dass der fünfte logische Lebenszyklus wirksam ist; und Nehmen eines zum Anzeigen von Ungültig verwendeten Validierungsergebnisses als das Validierungsergebnis der Zieltransaktion als Reaktion darauf, dass der fünfte logische Lebenszyklus unwirksam ist.

10. Verfahren nach Anspruch 8, wobei
in dem Fall, dass die lesetransaktionsbezogene Information eines der zu schreibenden Datenelemente einen maximalen Lesetransaktionszeitstempel des zu schreibenden Datenelements umfasst, wobei der maximale Lesetransaktionszeitstempel des zu schreibenden Datenelements zum Anzeigen eines Maximalwerts in logischen Festschreibungszeitstempeln von Lesetransaktionen, die das zu schreibende Datenelement gelesen haben, verwendet wird; und das Bestimmen eines fünften logischen Lebenszyklus der Zieltransaktion basierend auf lesetransaktionsbezogener Information von der lokalen Schreibmenge entsprechenden zu schreibenden Datenelementen und dem vierten logischen Lebenszyklus umfasst: Bestimmen des fünften logischen Lebenszyklus der Zieltransaktion basierend auf den maximalen Lesetransaktionszeitstempeln der zu schreibenden Datenelemente und dem vierten logischen Lebenszyklus, wobei eine Zeitstempeluntergrenze des fünften logischen Lebenszyklus größer als ein Maximalwert in den maximalen Lesetransaktionszeitstempeln der zu schreibenden Datenelemente ist; oder
in dem Fall, dass die lesetransaktionsbezogene Information eines der zu schreibenden Datenelemente einen Endzeitstempel einer Ziel-Lesetransaktion des zu schreibenden Datenelements umfasst, wobei die Ziel-Lesetransaktion eine lokal validierte oder in einer Festschreibungsphase befindliche Lesetransaktion ist, wobei der Endzeitstempel der Ziel-Lesetransaktion eine Zeitstempelobergrenze eines logischen Lebenszyklus der Ziel-Lesetransaktion ist; und das Bestimmen eines fünften logischen Lebenszyklus der Zieltransaktion basierend auf lesetransaktionsbezogener Information von der lokalen Schreibmenge entsprechenden zu schreibenden Datenelementen und dem vierten logischen Lebenszyklus umfasst: Bestimmen des fünften logischen Lebenszyklus der Zieltransaktion basierend auf den Endzeitstempeln der Ziel-Lesetransaktionen der zu schreibenden Datenelemente und dem vierten logischen Lebenszyklus, wobei eine Zeitstempeluntergrenze des fünften logischen Lebenszyklus größer als ein Maximalwert in den Endzeitstempeln der Ziel-Lesetransaktionen der zu schreibenden Datenelemente ist.

11. Transaktionsverarbeitungssystem, wobei das Transaktionsverarbeitungssystem eine Koordinatorknotenvorrichtung und eine Datenknotenvorrichtung umfasst, wobei die Koordinatorknotenvorrichtung eine Knotenvorrichtung ist, die dazu konfiguriert ist, eine Zieltransaktion in mindestens zwei Knotenvorrichtungen, die dasselbe Speichersystem teilen, zu koordinieren, wobei das gemeinsam genutzte Speichersystem dazu verwendet wird, dass die Knotenvorrichtung Daten aus dem gemeinsam genutzten Speichersystem gemäß einem Bedarf an Transaktionsinformation einer Transaktion abruft, wobei die Koordinatorknotenvorrichtung gemäß den den mindestens zwei Knotenvorrichtungen jeweils entsprechenden Transaktionszuteilungsindizes bestimmt wird, wobei die Datenknotenvorrichtung eine Knotenvorrichtung ist, die dazu konfiguriert ist, an der Verarbeitung der Zieltransaktion in den mindestens zwei Knotenvorrichtungen teilzunehmen;
wobei die Koordinatorknotenvorrichtung dazu konfiguriert ist, Transaktionsinformation der Zieltransaktion abzurufen; und eine Datenleseanforderung an die Datenknotenvorrichtung basierend auf der Transaktionsinformation der Zieltransaktion zu übertragen;
wobei die Datenknotenvorrichtung dazu konfiguriert ist, ein Datenleseergebnis basierend auf der von der Koordinatorknotenvorrichtung übertragenen Datenleseanforderung abzurufen und das Datenleseergebnis an die Koordinatorknotenvorrichtung zurückzugeben;
wobei die Koordinatorknotenvorrichtung ferner dazu konfiguriert ist, eine Transaktionsvalidierungsanforderung und eine lokale Schreibmenge an die Datenknotenvorrichtung als Reaktion darauf zu übertragen, dass das von der Datenknotenvorrichtung zurückgegebene Datenleseergebnis eine Transaktionsvalidierungsbedingung erfüllt;
wobei die Datenknotenvorrichtung ferner dazu konfiguriert ist, ein Validierungsergebnis der Zieltransaktion basierend auf der Transaktionsvalidierungsanforderung und der von der Koordinatorknotenvorrichtung übertragenen lokalen Schreibmenge abzurufen und das Validierungsergebnis der Zieltransaktion an die Koordinatorknotenvorrichtung zurückzugeben;
wobei die Koordinatorknotenvorrichtung ferner dazu konfiguriert ist, eine Verarbeitungsanweisung der Zieltransaktion basierend auf dem von der Datenknotenvorrichtung zurückgegebenen Validierungsergebnis der Zieltransaktion zu bestimmen und die Verarbeitungsanweisung an die Datenknotenvorrichtung zu übertragen, wobei die Verarbeitungsanweisung eine Festschreibungsanweisung oder eine Abbruchanweisung ist; und
wobei die Datenknotenvorrichtung ferner dazu konfiguriert ist, die Verarbeitungsanweisung als Reaktion auf das Empfangen der von der Koordinatorknotenvorrichtung übertragenen Verarbeitungsanweisung der Zieltransaktion auszuführen;
wobei die Transaktionszuteilungsindizes basierend auf einem Transaktionszuteilungsmodus bestimmt werden, wobei der Transaktionszuteilungsmodus zum Anzeigen einer Bestimmungsweise des Bestimmens der den Knotenvorrichtungen entsprechenden Transaktionszuteilungsindizes verwendet wird, und in verschiedenen Bestimmungsweisen die zum Bestimmen der Transaktionszuteilungsindizes verwendeten Berechnungsparameter und Berechnungsverfahren verschieden sind.

12. Computervorrichtung, umfassend einen Prozessor und einen Speicher, wobei der Speicher mindestens ein Computerprogramm speichert, wobei das mindestens eine Computerprogramm durch den Prozessor geladen und ausgeführt wird, um zu bewirken, dass die Computervorrichtung das Transaktionsverarbeitungsverfahren nach einem der Ansprüche 1 bis 5 oder das Transaktionsverarbeitungsverfahren nach einem der Ansprüche 6 bis 8 oder das Transaktionsverarbeitungsverfahren nach einem der Ansprüche 9 bis 13 implementiert.

13. Nichttransitorisches computerlesbares Speichermedium, das mindestens ein Computerprogramm speichert, wobei das mindestens eine Computerprogramm durch einen Prozessor geladen und ausgeführt wird, um zu bewirken, dass ein Computer das Transaktionsverarbeitungsverfahren nach einem der Ansprüche 1 bis 4 oder das Transaktionsverarbeitungsverfahren nach einem der Ansprüche 5 bis 7 oder das Transaktionsverarbeitungsverfahren nach einem der Ansprüche 8 bis 10 implementiert.

14. Computerprogrammprodukt, wobei das Computerprogrammprodukt Computeranweisungen umfasst, wobei die Computeranweisungen in einem computerlesbaren Speichermedium gespeichert sind, wobei ein Prozessor einer Computervorrichtung die Computeranweisungen aus dem computerlesbaren Speichermedium liest und der Prozessor die Computeranweisungen ausführt, um zu bewirken, dass die Computervorrichtung das Transaktionsverarbeitungsverfahren nach einem der Ansprüche 1 bis 4 oder das Transaktionsverarbeitungsverfahren nach einem der Ansprüche 5 bis 7 oder das Transaktionsverarbeitungsverfahren nach einem der Ansprüche 8 bis 10 durchführt.

## Revendications

1. Procédé de traitement de transaction, appliqué à un dispositif d'attribution de transaction, le dispositif d'attribution de transaction se trouve dans un système de base de données distribué basé sur une architecture de stockage partagé, le système de base de données distribué comprenant en outre au moins deux dispositifs de nœud partageant un même système de stockage, le système de stockage partagé est utilisé pour que le dispositif de nœud invoque des données depuis le système de stockage partagé selon un besoin d'informations de transaction d'une transaction, le procédé comprenant :
déterminer, en réponse à une demande d'attribution d'une transaction cible, un mode d'attribution de transaction à adopter lorsque la demande d'attribution de la transaction cible est reçue, dans lequel le mode d'attribution de transaction est utilisé pour indiquer un mode de détermination pour déterminer les indices d'attribution de transaction correspondant aux dispositifs de nœud, et dans différents modes de détermination, les paramètres de calcul et les procédés de calcul utilisés pour déterminer les indices d'attribution de transaction sont différents ;
déterminer, selon le mode de détermination indiqué par le mode d'attribution de transaction, les indices d'attribution de transaction correspondant aux au moins deux dispositifs de nœud, dans lequel les indices d'attribution de transaction correspondant respectivement aux au moins deux dispositifs de nœud, l'indice d'attribution de transaction indiquant un degré de correspondance de l'attribution d'une nouvelle transaction au dispositif de nœud respectif (201) ; et
déterminer un dispositif de nœud coordinateur de la transaction cible parmi les au moins deux dispositifs de nœud sur la base des indices d'attribution de transaction correspondant respectivement aux au moins deux dispositifs de nœud, et coordonner, par le dispositif de nœud coordinateur, la transaction cible (202).

2. Procédé selon la revendication 1, dans lequel le mode d'attribution de transaction comprend l'une parmi une attribution basée sur le degré d'occupation de transaction, une attribution basée sur le degré d'occupation de dispositif, et une attribution basée sur le degré d'occupation hybride ;
dans lequel, de préférence, le mode d'attribution de transaction comprend l'attribution basée sur le degré d'occupation hybride, et la détermination des indices d'attribution de transaction correspondant respectivement aux au moins deux dispositifs de nœud selon un mode de détermination indiqué par le mode d'attribution de transaction comprend :
déterminer un indice d'attribution de transaction correspondant à un premier dispositif de nœud sur la base d'une quantité de traitement de transaction du premier dispositif de nœud, d'un taux d'utilisation des ressources de dispositif du premier dispositif de nœud, d'un poids de quantité de traitement de transaction, d'un poids de taux d'utilisation des ressources de dispositif, et d'un paramètre d'ajustement de poids, le premier dispositif de nœud étant tout dispositif de nœud parmi les au moins deux dispositifs de nœud.

3. Procédé selon l'une quelconque des revendications 1 à 2, dans lequel, après la détermination d'un dispositif de nœud coordinateur de la transaction cible parmi les au moins deux dispositifs de nœud, le procédé comprend en outre :
transmettre des informations d'identifiant de dispositif du dispositif de nœud coordinateur à un terminal initiant la demande d'attribution, le terminal étant configuré pour transmettre des informations de transaction de la transaction cible au dispositif de nœud coordinateur selon les informations d'identifiant de dispositif du dispositif de nœud coordinateur, et coordonner, par le dispositif de nœud coordinateur, la transaction cible sur la base des informations de transaction.

4. Procédé selon l'une quelconque des revendications 1 à 2, dans lequel le système de base de données distribué prend en charge un format de stockage de données clé-valeur et un format de stockage de données segment-page.

5. Procédé de traitement de transaction, appliqué à un dispositif de nœud coordinateur, le dispositif de nœud coordinateur étant un dispositif de nœud qui est configuré pour coordonner une transaction cible parmi au moins deux dispositifs de nœud qui partagent un même système de stockage, le système de stockage partagé est utilisé pour que le dispositif de nœud invoque des données depuis le système de stockage partagé selon un besoin d'informations de transaction d'une transaction, le dispositif de nœud coordinateur étant déterminé selon les indices d'attribution de transaction correspondant respectivement aux au moins deux dispositifs de nœud, le procédé comprenant :
acquérir des informations de transaction de la transaction cible (203) ;
transmettre une demande de lecture de données à un dispositif de nœud de données sur la base des informations de transaction de la transaction cible, le dispositif de nœud de données étant un dispositif de nœud qui est configuré pour participer au traitement de la transaction cible parmi les au moins deux dispositifs de nœud (204) ;
transmettre une demande de validation de transaction et un ensemble d'écriture local au dispositif de nœud de données en réponse à un résultat de lecture de données renvoyé par le dispositif de nœud de données satisfaisant à une condition de validation de transaction (206) ; et
déterminer une instruction de traitement de la transaction cible sur la base d'un résultat de validation de la transaction cible renvoyé par le dispositif de nœud de données, et transmettre l'instruction de traitement au dispositif de nœud de données, l'instruction de traitement étant une instruction de validation ou une instruction d'abandon, le dispositif de nœud de données étant configuré pour exécuter l'instruction de traitement (208) ;
dans lequel les indices d'attribution de transaction sont déterminés sur la base d'un mode d'attribution de transaction, dans lequel le mode d'attribution de transaction est utilisé pour indiquer un mode de détermination pour déterminer les indices d'attribution de transaction correspondant aux dispositifs de nœud, et dans différents modes de détermination, les paramètres de calcul et les procédés de calcul utilisés pour déterminer les indices d'attribution de transaction sont différents.

6. Procédé selon la revendication 5, dans lequel le résultat de lecture de données porte un deuxième cycle de vie logique, le deuxième cycle de vie logique étant déterminé par le dispositif de nœud de données selon un premier cycle de vie logique de la transaction cible porté dans la demande de lecture de données, le premier cycle de vie logique étant formé par une borne inférieure d'horodatage et une borne supérieure d'horodatage ; et la transmission d'une demande de validation de transaction au dispositif de nœud de données en réponse à un résultat de lecture de données renvoyé par le dispositif de nœud de données satisfaisant à une condition de validation de transaction comprend :
prendre une valeur maximale dans la borne inférieure d'horodatage du premier cycle de vie logique et une borne inférieure d'horodatage du deuxième cycle de vie logique comme borne inférieure d'horodatage d'un troisième cycle de vie logique de la transaction cible ; prendre une valeur minimale dans la borne supérieure d'horodatage du premier cycle de vie logique et une borne supérieure d'horodatage du deuxième cycle de vie logique comme borne supérieure d'horodatage du troisième cycle de vie logique de la transaction cible ; et
transmettre, en réponse au troisième cycle de vie logique étant effectif, une demande de validation de transaction portant le troisième cycle de vie logique au dispositif de nœud de données, le troisième cycle de vie logique étant effectif étant utilisé pour indiquer que la borne inférieure d'horodatage du troisième cycle de vie logique est inférieure à la borne supérieure d'horodatage du troisième cycle de vie logique.

7. Procédé selon la revendication 5 ou 6, dans lequel au moins deux dispositifs de nœud de données sont fournis, et la détermination d'une instruction de traitement de la transaction cible sur la base d'un résultat de validation de la transaction cible renvoyé par le dispositif de nœud de données comprend :
prendre l'instruction d'abandon comme instruction de traitement de la transaction cible en réponse à au moins deux résultats de validation renvoyés par les au moins deux dispositifs de nœud de données comprenant un résultat de validation utilisé pour indiquer Invalidé ;
prendre l'intersection des cycles de vie logiques portés dans les au moins deux résultats de validation comme cycle de vie logique cible en réponse aux au moins deux résultats de validation renvoyés par les au moins deux dispositifs de nœud de données indiquant Validé ;
prendre l'instruction de validation comme instruction de traitement de la transaction cible en réponse au cycle de vie logique cible étant effectif ; et prendre l'instruction d'abandon comme instruction de traitement de la transaction cible en réponse au cycle de vie logique cible étant non effectif.

8. Procédé de traitement de transaction, appliqué à un dispositif de nœud de données, le dispositif de nœud de données étant un dispositif de nœud qui est configuré pour participer au traitement d'une transaction cible parmi au moins deux dispositifs de nœud qui partagent un même système de stockage, le système de stockage partagé est utilisé pour que le dispositif de nœud invoque des données depuis le système de stockage partagé selon un besoin d'informations de transaction d'une transaction, le procédé comprenant :
acquérir un résultat de lecture de données sur la base d'une demande de lecture de données transmise par un dispositif de nœud coordinateur, et retourner le résultat de lecture de données au dispositif de nœud coordinateur, le dispositif de nœud coordinateur étant déterminé selon les indices d'attribution de transaction correspondant respectivement aux au moins deux dispositifs de nœud (205) ;
acquérir un résultat de validation de la transaction cible sur la base d'une demande de validation de transaction et d'un ensemble d'écriture local transmis par le dispositif de nœud coordinateur, et retourner le résultat de validation de la transaction cible au dispositif de nœud coordinateur (207) ; et
exécuter, en réponse à la réception d'une instruction de traitement de la transaction cible transmise par le dispositif de nœud coordinateur, l'instruction de traitement, l'instruction de traitement étant une instruction de validation ou une instruction d'abandon (209) ;
dans lequel les indices d'attribution de transaction sont déterminés sur la base d'un mode d'attribution de transaction, dans lequel le mode d'attribution de transaction est utilisé pour indiquer un mode de détermination pour déterminer les indices d'attribution de transaction correspondant aux dispositifs de nœud, et dans différents modes de détermination, les paramètres de calcul et les procédés de calcul utilisés pour déterminer les indices d'attribution de transaction sont différents.

9. Procédé selon la revendication 8, dans lequel la demande de lecture de données porte un premier cycle de vie logique de la transaction cible, le premier cycle de vie logique étant formé par une borne inférieure d'horodatage et une borne supérieure d'horodatage ; et l'acquisition d'un résultat de lecture de données sur la base d'une demande de lecture de données transmise par un dispositif de nœud coordinateur comprend :
déterminer, sur la base du premier cycle de vie logique, des données de version visible d'un élément de données à lire indiqué par la demande de lecture de données ;
déterminer un deuxième cycle de vie logique de la transaction cible sur la base d'un horodatage de création des données de version visible et du premier cycle de vie logique ; et
prendre un résultat portant le deuxième cycle de vie logique et les données de version visible comme résultat de lecture de données.
dans lequel, de préférence, la demande de validation de transaction porte un troisième cycle de vie logique de la transaction cible, le troisième cycle de vie logique étant un cycle de vie logique effectif déterminé par le dispositif de nœud coordinateur sur la base du premier cycle de vie logique et du deuxième cycle de vie logique ; et l'acquisition d'un résultat de validation de la transaction cible sur la base d'une demande de validation de transaction et d'un ensemble d'écriture local transmis par le dispositif de nœud coordinateur comprend :
prendre une valeur maximale dans une borne inférieure d'horodatage du troisième cycle de vie logique et une borne inférieure d'horodatage du deuxième cycle de vie logique comme borne inférieure d'horodatage d'un quatrième cycle de vie logique de la transaction cible ; prendre une valeur minimale dans une borne supérieure d'horodatage du troisième cycle de vie logique et une borne supérieure d'horodatage du deuxième cycle de vie logique comme borne supérieure d'horodatage du quatrième cycle de vie logique de la transaction cible ;
déterminer un cinquième cycle de vie logique de la transaction cible sur la base d'informations relatives aux transactions de lecture d'éléments de données à écrire correspondant à l'ensemble d'écriture local et du quatrième cycle de vie logique en réponse au quatrième cycle de vie logique étant effectif ;
prendre un résultat de validation utilisé pour indiquer Validé comme résultat de validation de la transaction cible en réponse au cinquième cycle de vie logique étant effectif ; et prendre un résultat de validation utilisé pour indiquer Invalidé comme résultat de validation de la transaction cible en réponse au cinquième cycle de vie logique étant non effectif.

10. Procédé selon la revendication 8, dans lequel
dans le cas où les informations relatives aux transactions de lecture de l'un des éléments de données à écrire comprennent un horodatage maximal de transaction de lecture de l'élément de données à écrire, l'horodatage maximal de transaction de lecture de l'élément de données à écrire étant utilisé pour indiquer une valeur maximale dans les horodatages de validation logiques des transactions de lecture qui ont lu l'élément de données à écrire ; et la détermination d'un cinquième cycle de vie logique de la transaction cible sur la base d'informations relatives aux transactions de lecture d'éléments de données à écrire correspondant à l'ensemble d'écriture local et du quatrième cycle de vie logique comprend : déterminer le cinquième cycle de vie logique de la transaction cible sur la base des horodatages maximaux de transaction de lecture des éléments de données à écrire et du quatrième cycle de vie logique, une borne inférieure d'horodatage du cinquième cycle de vie logique étant supérieure à une valeur maximale dans les horodatages maximaux de transaction de lecture des éléments de données à écrire ; ou
dans le cas où les informations relatives aux transactions de lecture de l'un des éléments de données à écrire comprennent un horodatage de fin d'une transaction de lecture cible de l'élément de données à écrire, la transaction de lecture cible étant une transaction de lecture validée localement ou dans une phase de validation, l'horodatage de fin de la transaction de lecture cible étant une borne supérieure d'horodatage d'un cycle de vie logique de la transaction de lecture cible ; et la détermination d'un cinquième cycle de vie logique de la transaction cible sur la base d'informations relatives aux transactions de lecture d'éléments de données à écrire correspondant à l'ensemble d'écriture local et du quatrième cycle de vie logique comprend : déterminer le cinquième cycle de vie logique de la transaction cible sur la base des horodatages de fin des transactions de lecture cibles des éléments de données à écrire et du quatrième cycle de vie logique, une borne inférieure d'horodatage du cinquième cycle de vie logique étant supérieure à une valeur maximale dans les horodatages de fin des transactions de lecture cibles des éléments de données à écrire.

11. Système de traitement de transaction, le système de traitement de transaction comprenant un dispositif de nœud coordinateur et un dispositif de nœud de données, le dispositif de nœud coordinateur étant un dispositif de nœud qui est configuré pour coordonner une transaction cible parmi au moins deux dispositifs de nœud qui partagent un même système de stockage, le système de stockage partagé est utilisé pour que le dispositif de nœud invoque des données depuis le système de stockage partagé selon un besoin d'informations de transaction d'une transaction, le dispositif de nœud coordinateur étant déterminé selon les indices d'attribution de transaction correspondant respectivement aux au moins deux dispositifs de nœud, le dispositif de nœud de données étant un dispositif de nœud qui est configuré pour participer au traitement de la transaction cible parmi les au moins deux dispositifs de nœud ;
le dispositif de nœud coordinateur étant configuré pour acquérir des informations de transaction de la transaction cible ; et transmettre une demande de lecture de données au dispositif de nœud de données sur la base des informations de transaction de la transaction cible ;
le dispositif de nœud de données étant configuré pour acquérir un résultat de lecture de données sur la base de la demande de lecture de données transmise par le dispositif de nœud coordinateur, et retourner le résultat de lecture de données au dispositif de nœud coordinateur ;
le dispositif de nœud coordinateur étant en outre configuré pour transmettre une demande de validation de transaction et un ensemble d'écriture local au dispositif de nœud de données en réponse au résultat de lecture de données renvoyé par le dispositif de nœud de données satisfaisant à une condition de validation de transaction ;
le dispositif de nœud de données étant en outre configuré pour acquérir un résultat de validation de la transaction cible sur la base de la demande de validation de transaction et de l'ensemble d'écriture local transmis par le dispositif de nœud coordinateur, et retourner le résultat de validation de la transaction cible au dispositif de nœud coordinateur ;
le dispositif de nœud coordinateur étant en outre configuré pour déterminer une instruction de traitement de la transaction cible sur la base du résultat de validation de la transaction cible renvoyé par le dispositif de nœud de données, et transmettre l'instruction de traitement au dispositif de nœud de données, l'instruction de traitement étant une instruction de validation ou une instruction d'abandon ; et
le dispositif de nœud de données étant en outre configuré pour exécuter l'instruction de traitement en réponse à la réception de l'instruction de traitement de la transaction cible transmise par le dispositif de nœud coordinateur ;
dans lequel les indices d'attribution de transaction sont déterminés sur la base d'un mode d'attribution de transaction, dans lequel le mode d'attribution de transaction est utilisé pour indiquer un mode de détermination pour déterminer les indices d'attribution de transaction correspondant aux dispositifs de nœud, et dans différents modes de détermination, les paramètres de calcul et les procédés de calcul utilisés pour déterminer les indices d'attribution de transaction sont différents.

12. Dispositif informatique, comprenant un processeur et une mémoire, la mémoire stockant au moins un programme informatique, l'au moins un programme informatique étant chargé et exécuté par le processeur, pour amener le dispositif informatique à mettre en œuvre le procédé de traitement de transaction selon l'une quelconque des revendications 1 à 5, ou le procédé de traitement de transaction selon l'une quelconque des revendications 6 à 8, ou le procédé de traitement de transaction selon l'une quelconque des revendications 9 à 13.

13. Support de stockage lisible par ordinateur non transitoire, stockant au moins un programme informatique, l'au moins un programme informatique étant chargé et exécuté par un processeur pour amener un ordinateur à mettre en œuvre le procédé de traitement de transaction selon l'une quelconque des revendications 1 à 4, ou le procédé de traitement de transaction selon l'une quelconque des revendications 5 à 7, ou le procédé de traitement de transaction selon l'une quelconque des revendications 8 à 10.

14. Produit de programme informatique, le produit de programme informatique comprenant des instructions informatiques, les instructions informatiques étant stockées dans un support de stockage lisible par ordinateur, un processeur d'un dispositif informatique lisant les instructions informatiques depuis le support de stockage lisible par ordinateur, et le processeur exécutant les instructions informatiques pour amener le dispositif informatique à effectuer le procédé de traitement de transaction selon l'une quelconque des revendications 1 à 4, ou le procédé de traitement de transaction selon l'une quelconque des revendications 5 à 7, ou le procédé de traitement de transaction selon l'une quelconque des revendications 8 à 10.
